(19) Europäisches Patentamt
European Patent Office
Office européen des brevets

(11) EP 0 648 817 B1

# (12) EUROPÄISCHE PATENTSCHRIFT

(45) Veröffentlichungstag und Bekanntmachung des Hinweises auf die Patenterteilung:
**10.11.1999 Patentblatt 1999/45**

(51) Int Cl.[6]: **C09B 69/08**, C09K 11/06, C08K 5/16, G03G 5/00

(21) Anmeldenummer: **94810581.2**

(22) Anmeldetag: **04.10.1994**

## (54) Neue Fluoreszenzfarbstoffe

Novel fluorescent dyes

Colorants à fluorescence nouveaux

(84) Benannte Vertragsstaaten:
**BE CH DE FR GB IT LI NL**

(30) Priorität: **13.10.1993 CH 308093**
**18.11.1993 CH 344293**

(43) Veröffentlichungstag der Anmeldung:
**19.04.1995 Patentblatt 1995/16**

(73) Patentinhaber: **Ciba Specialty Chemicals Holding Inc.**
**4057 Basel (CH)**

(72) Erfinder:
- **Hao, Zhimin, Dr.**
  **CH-1723 Marly (CH)**
- **Zambounis, John S., Dr.**
  **CH-3280 Murten (CH)**
- **Iqbal, Abul, Dr.**
  **CH-1732 Arconciel (CH)**

(56) Entgegenhaltungen:
**DE-A- 2 250 107**
**FR-A- 1 531 223**
**JP-A- 60 031 569**
**JP-A- 60 167 993**
**US-A- 3 839 316**
**US-A- 4 080 322**
**US-A- 4 585 878**
**US-A- 4 791 204**
**US-A- 5 116 958**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 648 817 B1

## Beschreibung

Die vorliegende Erfindung betrifft neue Carbamatgruppen enthaltende lösliche Chromophore, ihre Herstellung und ihre Verwendung als Fluoreszenzfarbstoffe sowie als Pigmentvorstufen, die sich leicht in die entsprechenden Pigmente umwandeln lassen.

Aus den US Patenten 4 585 878 und 4 791 204 sind N-substituierte Pyrrolo[3,4-c]pyrrole bekannt. Aus der generischen Definition aller Substituenten kann entnommen werden, dass die N-Substituenten unter anderem auch Alkoxycarbonylgruppen sein können, die im US-Patent 4 791 204 beispielsweise als Methoxycarbonyl, Ethoxycarbonyl, n-Propoxycarbonyl, n-Butoxycarbonyl und n-Hexyloxycarbonyl ausgedeutet werden. Aus US-Patent 4 585 878 ist bekannt, dass die darin beschriebenen N-substituierten Pyrrolo[3,4-c]pyrrole in gelöster Form in Polymeren eine hohe Fluoreszenz zeigen.

DE-OS 2 250 107 offenbart ein Verfahren zur Herstellung von 1,1'-Dianthrachinonylen, wobei aus einer löslichen Teilkomponente gestartet wird und bei der Freisetzung der Aminogruppe Flavanthron entsteht. FR-1.531.223 beschreibt thermofixierstabile Polyesterfarbstoffe mit einer Urethangruppe an einem vom Chromophor durch eine Kette getrenntem Phenylkern. US-3,839,316 und US-4,080,322 offenbaren saure Azo-Textilfarbstoffe, welche eine thermisch offensichtlich nicht abspaltbare Urethangruppe aufweisen. JP-60/31560 beschreibt thermostabile Sublimationsfarbstoffe für den Transferdruck, welche unter anderem Urethangruppen aufweisen können. JP-60/167993 beschreibt Azo- oder Anthrachinon-Papierfarbstoffe mit Urethangruppen.

Gemäss der vorliegenden Erfindung sind nun neue Carbamatgruppen enthaltende lösliche Chromophore gefunden worden, die überraschenderweise eine sehr hohe Festkörperfluoreszenz, speziell im UV, aufweisen, sich aber auch leicht, bei gleichzeitiger Verschiebung des Absorptionsspektrums, in die entsprechenden Pigmente umwandeln lassen, und demnach den Weg zu unerhofften Applikationen frei machen.

Die vorliegende Erfindung betrifft demnach Verbindungen der Formel

$$A(B)_x \qquad (I),$$

worin

A für den Rest eines Farbstoffes der Chinacridon-, 4,4'-Diamino-1,1'-dianthrachinonyl-, Indanthron , Perylen-, Indigo-, Chinophthalon-, Isoindolinon-, Isoindolin-, Dioxazin-, Phthalocyanin- oder Arylazo-aceto-acetamido-aryl-reihe steht, der N-Atome enthält, woran die x Gruppen B gebunden sind, vorzugsweise mit mindestens einer unmittelbar benachbarten oder konjugierten Carbonylgruppe,
B eine Gruppe der Formel

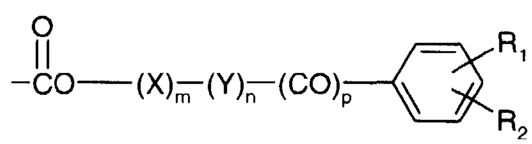

(II),

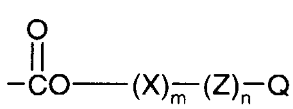

(III)

oder

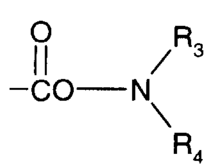

(IV)

ist, und wenn x 2 oder mehr bedeutet, auch ein- bis z-mal Wasserstoff sein kann, wobei z gleich x-1 ist, und x eine ganze Zahl von 1 bis 4 oder, wenn A für einen Rest

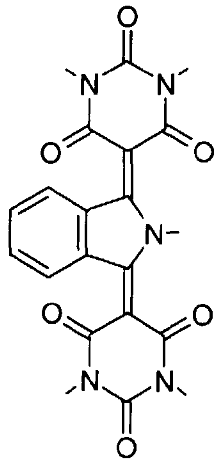

steht, die Zahl 5 bedeutet,

wobei in den Formeln II, III und IV

| | |
|---|---|
| m, n und p | unabhängig voneinander Null oder 1 sind, |
| X | $C_1$-$C_{14}$-Alkylen oder $C_2$-$C_8$-Alkenylen, |
| Y | eine Gruppe -V-$(CH_2)_q$-, |
| Z | eine Gruppe -V-$(CH_2)_r$-, |
| V | $C_3$-$C_6$-Cycloalkylen, |
| q | eine Zahl von 1 bis 6 und |
| r | eine Zahl von Null bis 6 bedeuten, |
| $R_1$ und $R_2$ | unabhängig voneinander Wasserstoff, $C_1$-$C_6$-Alkyl, $C_1$-$C_4$-Alkoxy, Halogen, CN, $NO_2$, unsubstituiertes oder durch $C_1$-$C_4$-Alkyl, $C_1$-$C_4$-Alkoxy oder Halogen substituiertes Phenyl oder Phenoxy sind, |
| Q | Wasserstoff, CN, $Si(R_1)_3$, eine Gruppe $C(R_5)(R_6)(R_7)$, worin $R_5$, $R_6$ und $R_7$ unabhängig voneinander Wasserstoff oder Halogen sind und mindestens einer der Reste $R_5$, $R_6$ und $R_7$ Halogen bedeutet, eine Gruppe |

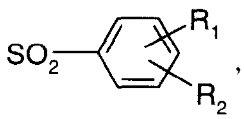

worin $R_1$ und $R_2$ die oben angegebene Bedeutung haben,
eine Gruppe $SO_2R_8$ oder $SR_8$, worin $R_8$ $C_1$-$C_4$-Alkyl ist,

eine Gruppe $CH(R_9)_2$, worin $R_9$ unsubstituiertes oder durch $C_1$-$C_4$-Alkyl, $C_1$-$C_4$-Alkoxy oder Halogen substituiertes Phenyl bedeutet,
oder
eine Gruppe der Formel

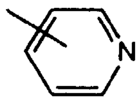, 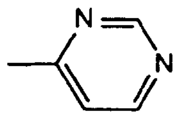, 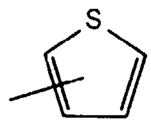, 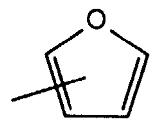,

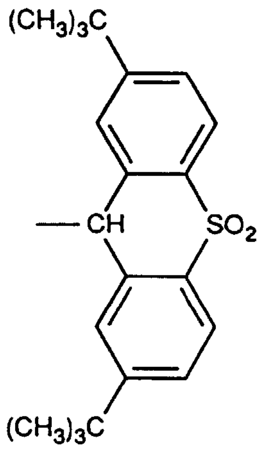, 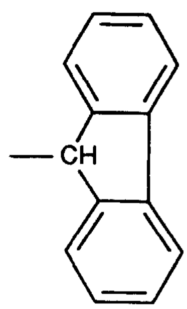, 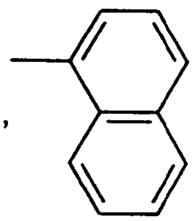 oder 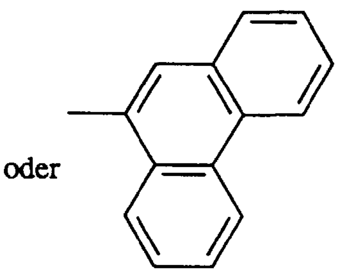

bedeutet,
$R_3$ und $R_4$ unabhängig voneinander Wasserstoff, $C_1$-$C_{18}$-Alkyl eine Gruppe

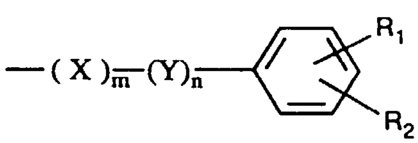,

worin X, Y, $R_1$, $R_2$, m und n die oben angegebene Bedeutung haben, oder $R_3$ und $R_4$ zusammen mit dem Stickstoffatom an dem sie gebunden sind einen Pyrrolidinyl-, Piperidinyl- oder Morpholinylrest bilden,
mit der Massgabe, dass $A(B)_x$ nicht gleich

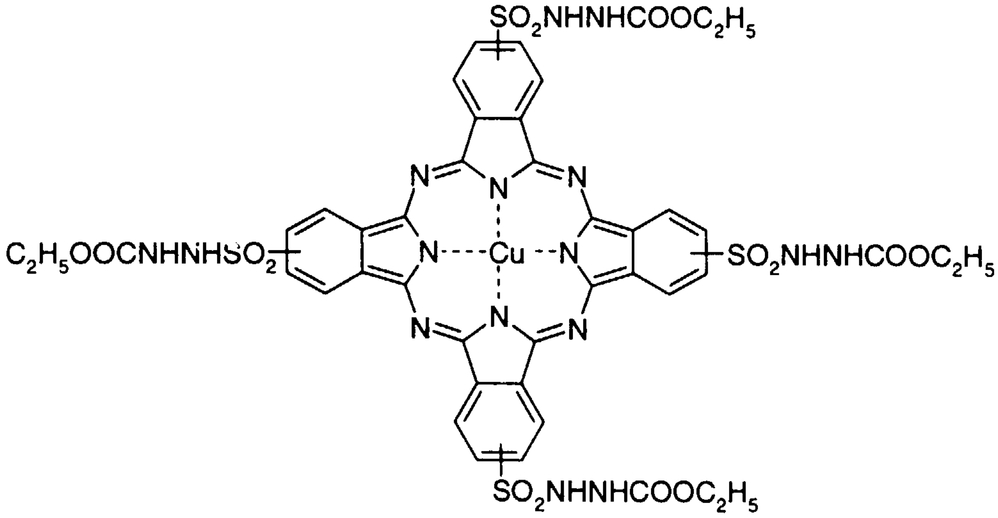

ist.

A bedeutet den Rest bekannter Chromophore mit der Grundstruktur

$$A(H)_x,$$

wie beispielsweise

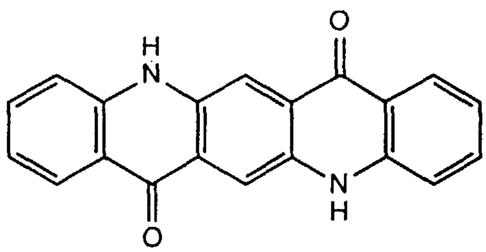

,

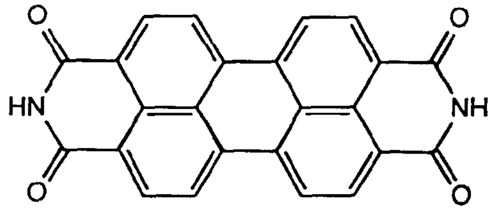

,

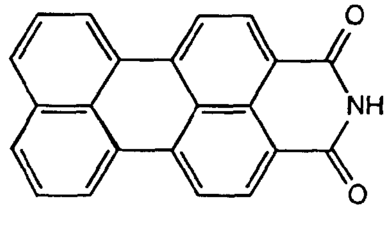

,

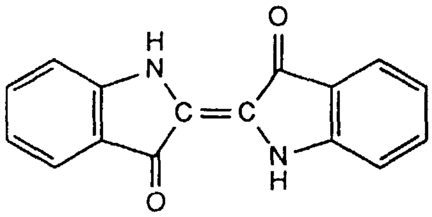

,

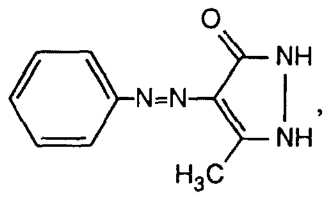

,

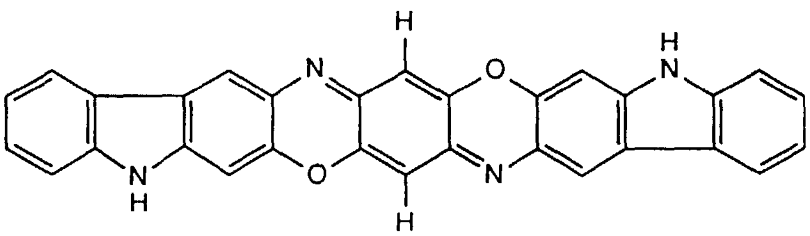

,

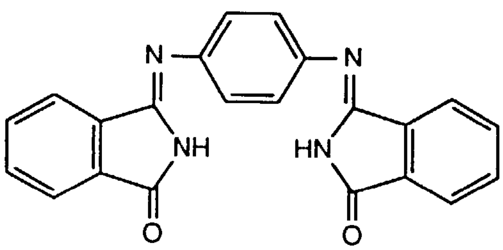

,

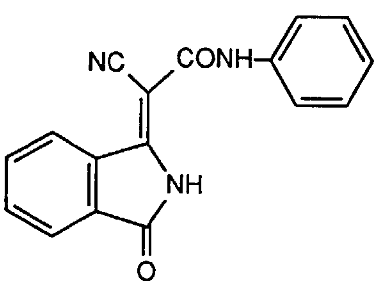

,

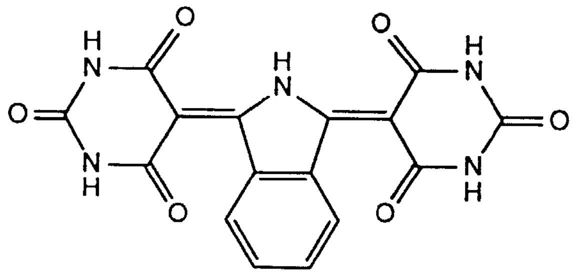

,

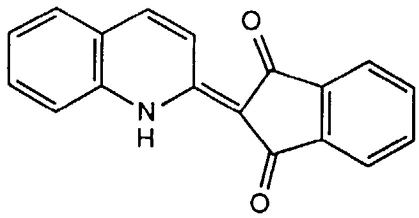

,

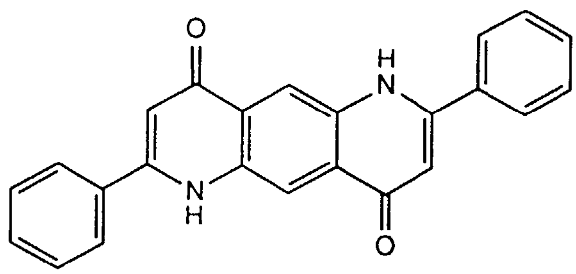

,

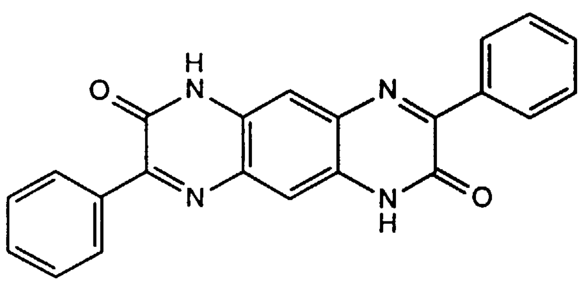

,

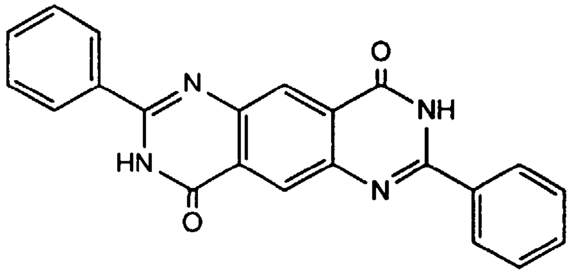

,

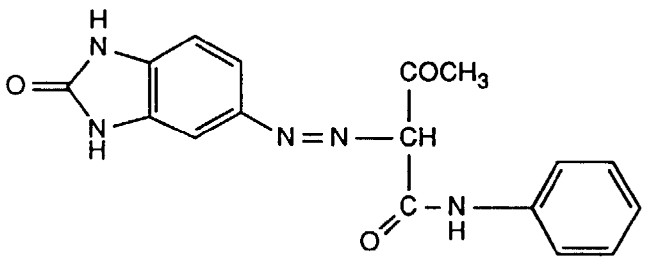

,

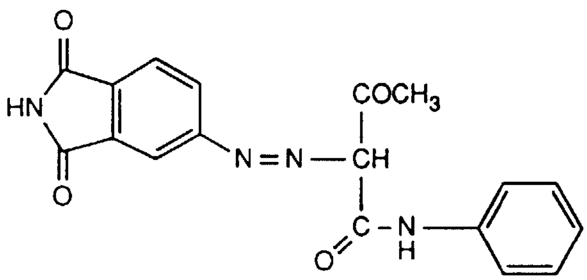

,

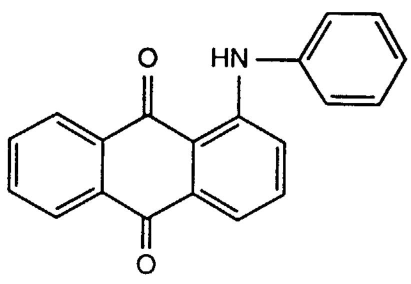

,

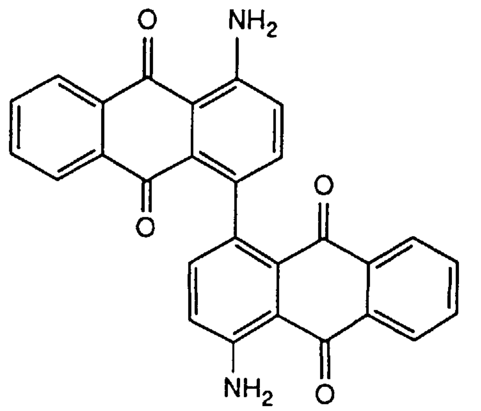

,

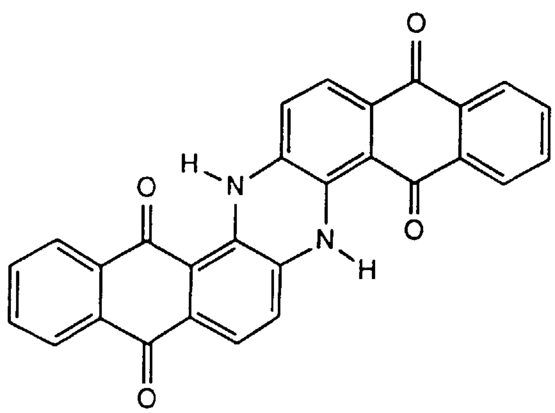

,

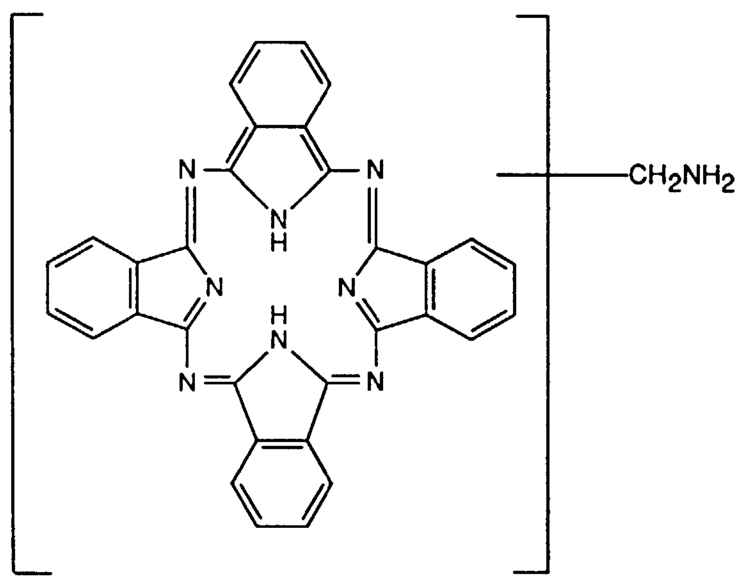

und jeweils alle bekannten Derivate davon.

Bedeutet X $C_1$-$C_{14}$-Alkylen, so handelt es sich um ein geradkettiges oder verzweigtes Alkylen, wie z.B. Methylen, Dimethylen, Trimethylen, 1-Methyl-methylen, 1,1-Dimethyl-methylen, 1,1-Dimethyl-dimethylen, 1,1-Dimethyl-trimethylen, 1-Ethyl-dimethylen, 1-Ethyl-1-methyl-dimethylen, Tetramethylen, 1,1-Dimethyl-tetramethylen, 2,2-Dimethyl-trimethylen, Hexamethylen, Decamethylen, 1,1 -Dimethyl-decamethylen, 1,1-Diethyl-decamethylen oder Tetradecamethylen.

X als $C_2$-$C_8$-Alkenylen bedeutet geradkettiges oder verzweigtes Alkenylen, wie z.B. Vinylen, Allylen, Methallylen, 1-Methyl-2-butenylen, 1,1-Dimethyl-3-butenylen, 2-Butenylen, 2-Hexenylen, 3-Hexenylen oder 2-Octenylen.

Bedeuten etwaige Substitutenten Halogen, dann handelt es sich z.B. um Jod, Fluor, insbesondere Brom und bevorzugt Chlor;

bei $C_1$-$C_6$-Alkyl handelt es sich beispielsweise um Methyl, Ethyl, n-Propyl, Isopropyl, n-Butyl, sec.-Butyl, tert.-Butyl, n-Amyl, tert.-Amyl, Hexyl und bei $C_1$-$C_{18}$-Alkyl zusätzlich z.B. um Heptyl, Octyl, 2-Ethylhexyl, Nonyl, Decyl, Dodecyl, Tetradecyl, Hexadecyl oder Octadecyl;

$C_1$-$C_4$-Alkoxy bedeutet z.B. Methoxy, Ethoxy, n-Propoxy, Isopropoxy oder Butyloxy. $C_3$-$C_6$-Cycloalkylen steht z.B. für Cyclopropylen, Cyclopentylen und insbesondere für Cyclohexylen.

Von besonderem Interesse sind Verbindungen der Formel I, worin x 1 oder 2 ist und B eine Gruppe der Formel

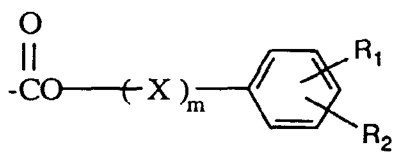

(V),

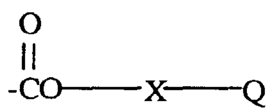

(VI) oder (IV)

ist, und, wenn x 2 bedeutet, auch einmal Wasserstoff sein kann, wobei in den Formeln IV, V und VI

| | |
|---|---|
| m | Null oder 1 bedeutet, |
| X | $C_1$-$C_4$-Alkylen oder $C_2$-$C_5$-Alkenylen ist, |
| $R_1$ und $R_2$ | unabhängig voneinander Wasserstoff, $C_1$-$C_4$-Alkyl, Methoxy, Chlor oder $NO_2$ bedeuten, und |
| Q | Wasserstoff, CN, $CCl_3$, eine Gruppe |

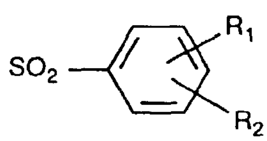

,

$SO_2CH_3$ oder $SCH_3$,

$R_3$ und $R_4$ unabhängig voneinander Wasserstoff, $C_1$-$C_4$-Alkyl oder eine Gruppe

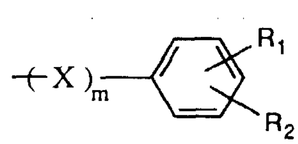

bedeuten,
oder $R_3$ und $R_4$ zusammen einen Piperidinylrest bilden,

und insbesondere jene, worin x 2 ist und B zweimal eine Gruppe der Formel

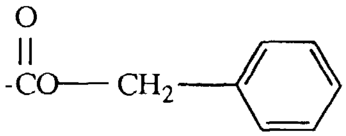
,
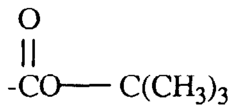
,
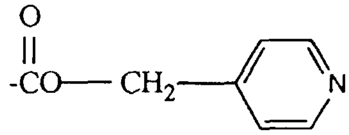
,

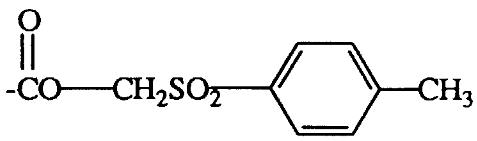
oder
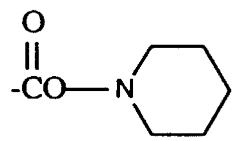

bedeutet.

Bevorzugte Verbindungen der Formel I sind

a) Perylencarbonsäureimide der Formel

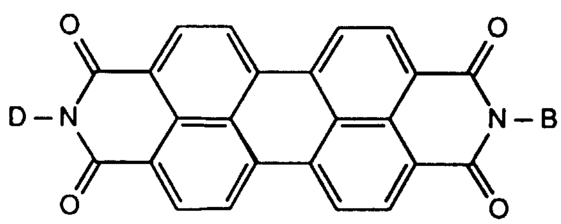
(VIIa)

oder

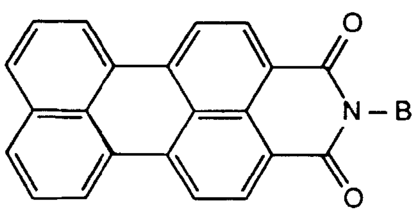
(VIIb),

worin D Wasserstoff, $C_1$-$C_6$-Alkyl, unsubstituiertes oder durch Halogen oder $C_1$-$C_4$-Alkyl substituiertes Phenyl, Benzyl oder Phenethyl oder B bedeutet,

b) Chinacridone der Formel

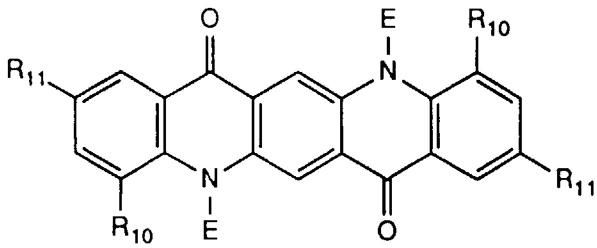

(VIII),

worin $R_{10}$ und $R_{11}$ unabhängig voneinander Wasserstoff, Halogen, $C_1$-$C_{18}$-Alkyl, $C_1$-$C_4$-Alkoxy oder Phenyl ist,

c) Dioxazine der Formel

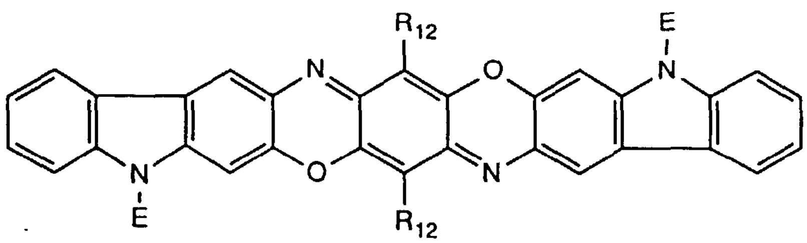

(IX),

worin $R_{12}$ Wasserstoff, Halogen oder $C_1$-$C_{18}$-Alkyl ist,

d) Isoindoline der Formeln

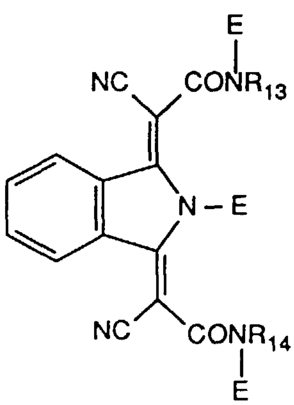

,

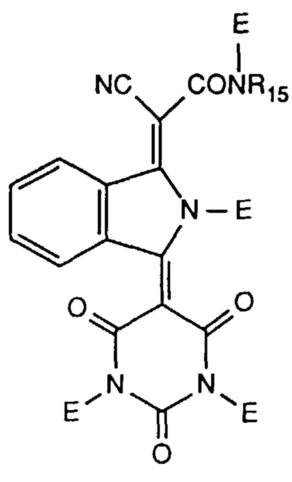

oder

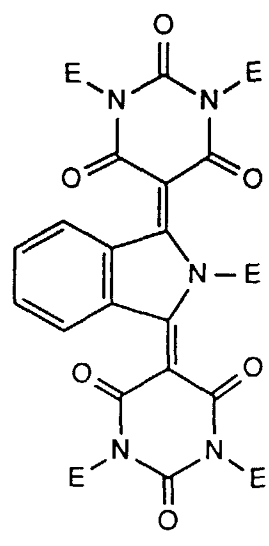

(X) (XI) (XII)

worin $R_{13}$ eine Gruppe

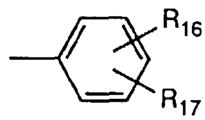

ist,

| | |
|---|---|
| $R_{14}$ | Wasserstoff, $C_1$-$C_{18}$-Alkyl, Benzyl oder eine Gruppe |

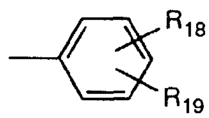

| | |
|---|---|
| | bedeutet |
| $R_{15}$ | die gleiche Bedeutung wie $R_{13}$ hat, |
| $R_{16}$, $R_{17}$, $R_{18}$ und $R_{19}$ | unabhängig voneinander Wasserstoff, $C_1$-$C_{18}$-Alkyl, $C_1$-$C_4$-Alkoxy, Halogen oder Trifluormethyl bedeuten, |

e) Indigoderivate der Formel

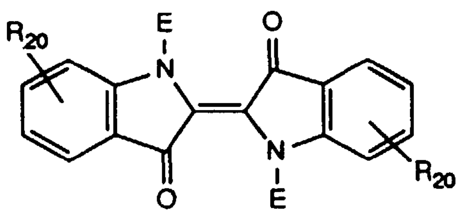

(XIII),

worin $R_{20}$ Wasserstoff, CN, $C_1$-$C_4$-Alkyl, $C_1$-$C_4$-Alkoxy oder Halogen bedeutet,

f) Azoverbindungen der Formel

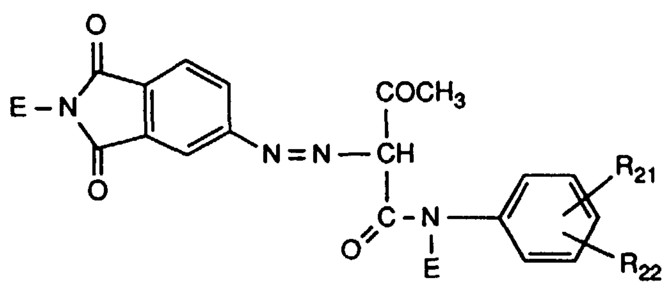

(XIV),

worin $R_{21}$ und $R_{22}$ unabhängig voneinander Wasserstoff, Halogen, $C_1$-$C_4$-Alkyl oder $C_1$-$C_4$-Alkoxy sind,

g) anthrachinoide Verbindungen der Formel

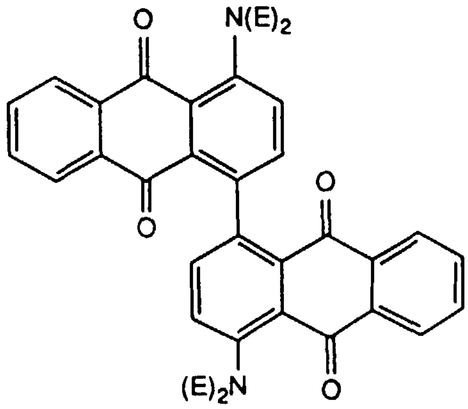

(XV),

und

h) Phthalocyanine der Formel

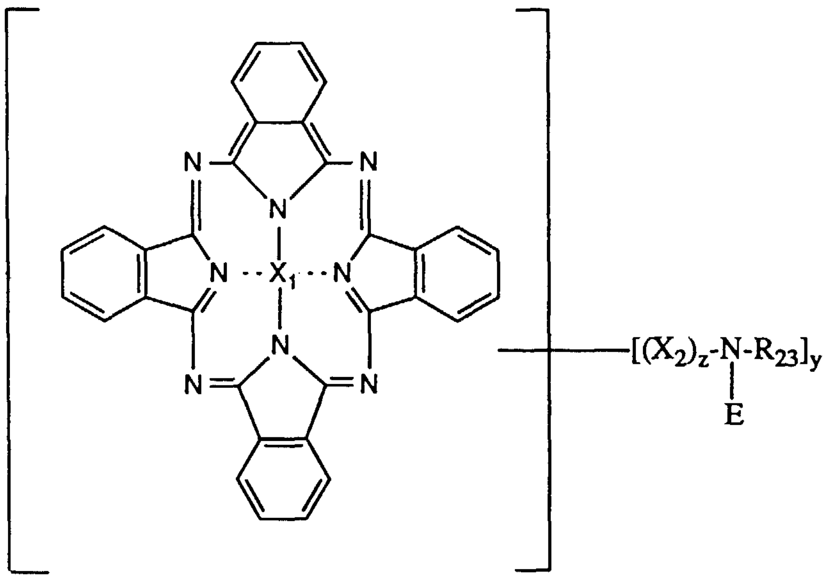

(XVI),

worin

$X_1$ $H_2$, Zn, Cu, Ni, Fe oder V,
$X_2$ $-CH(R_{24})-$ oder $-SO_2-$
$R_{23}$ Wasserstoff, $C_1$-$C_4$-Alkyl, $-N(E)R_{24}$, $-NHCOR_{25}$, $-COR_{25}$ oder

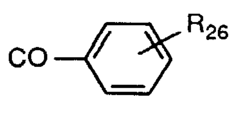,

$R_{24}$ Wasserstoff oder $C_1$-$C_4$-Alkyl, $R_{25}$ $C_1$-$C_4$-Alkyl und $R_{26}$ Wasserstoff, Halogen, $C_1$-$C_4$-Alkyl oder $C_1$-$C_4$-Alkoxy bedeuten,
z für Null oder 1 und y für eine Zahl von 1 bis 4 stehen,

wobei in den obenerwähnten Formeln E jeweils Wasserstoff oder B bedeutet, mit der Massgabe, dass E in jeder Formel mindestens einmal B ist, und B die oben angegebene Bedeutung hat, für welche die obenerwähnten Bevorzugungen

gelten.

Unter den Phthalocyaninen sind jene der Formel XVI, worin $X_1$ $H_2$, Cu oder Zn, $X_2$ $-CH_2-$oder $-SO_2-$, $R_{23}$ Wasserstoff, $-NHCOCH_3$ oder Benzoyl und z die Zahl 1 bedeuten, bevorzugt.

Zur Herstellung von N-substituierten Pyrrolopyrrolen wird im US-Patent 4 585 878 beispielsweise erwähnt, dass man sie durch Umsetzung eines N-unsubstituierten Pyrrolo-[3,4-c]pyrrols mit einer die entsprechenden N-Substituenten als Abgangsgruppen enthaltenden Verbindung in einem organischen Lösungsmittel, erhalten kann. Im einzigen eine N-Carbonylgruppe enthaltenden Verbindung beschriebenen Beispiel (Beispiel 9: N-Benzoyl) wird 1,4-Diketo-3,6-diphenyl-pyrrolo[3,4-c]pyrrol mit Benzoylchlorid umgesetzt. Beim Versuch, in analoger Weise durch Umsetzung mit einem entsprechenden Säurechloridderivat, z.B. einem Chlorkohlensäureester, die gewünschten Carbamate herzustellen, musste leider festgestellt werden, dass sie nur mit einer schlechten Ausbeute erhalten werden können.

Es wurde aber gefunden, dass beim Verwenden entsprechender Trihaloessigsäureester, Azide, Carbonate, Alkylideniminooxyameisensäureester oder insbesondere entsprechender Dicarbonate, die gewünschten Carbamate ganz überraschend mit sehr guter Ausbeute erhalten werden. Eine wenn auch in geringerem Masse verbesserte Ausbeute wird auch erhalten, wenn die Umsetzung mit einem aliphatischen Säurechloridderivat, z.B. Chlorameisensäurebutylester, in Gegenwart einer Base als Katalysator durchgeführt wird.

Ein weiterer Gegenstand der Erfindung ist demnach ein Verfahren zur Herstellung von Verbindungen der Formel I, dadurch gekennzeichnet, dass eine Verbindung der Formel

$$A(H)_x, \qquad (XVII)$$

worin A und x die oben angegebene Bedeutung haben, im gewünschten Molverhältnis mit einem Dicarbonat der Formel

$$B - O - B \qquad (XVIII)$$

oder mit einem Trihaloessigsäureester der Formel

$$(R_{27})_3C - B \qquad (XIX),$$

oder mit einem Azid der Formel

$$BN_3 \qquad (XX),$$

oder mit einem Carbonat der Formel

$$B\text{-}OR_{28} \qquad (XXI),$$

oder mit einem Alkylideniminooxyameisensäureester der Formel

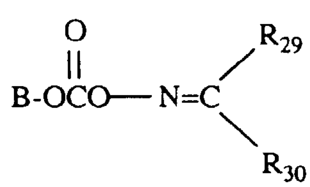

(XXII),

worin B jeweils die oben angegebene Bedeutung hat, $R_{27}$ Chlor, Fluor oder Brom, $R_{28}$ $C_1$-$C_4$-Alkyl oder unsubstituiertes oder durch Halogen, $C_1$-$C_4$-Alkyl, $C_1$-$C_4$-Alkoxy oder -CN substituiertes Phenyl, $R_{29}$ -CN oder $-COOR_{28}$ und $R_{30}$ unsubstituiertes oder durch Halogen, $C_1$-$C_4$-Alkyl, $C_1$-$C_4$-Alkoxy oder -CN substituiertes Phenyl bedeuten, in einem aprotischen organischen Lösungsmittel in Gegenwart einer Base als Katalysator, zweckmässig bei Temperaturen zwischen 0 und 400°C, bevorzugt zwischen 10 und 200°C, während 2 bis 80 Stunden, umgesetzt wird.

Bevorzugt wird die Verbindung der Formel XVII mit einem Dicarbonat der Formel XVIII umgesetzt.

Die Verbindungen der Formel XVII, Dicarbonate der Formel XVIII, Trihaloessigsäureester der Formel XIX, Azide der Formel XX, Carbonate der Formel XXI und Alkylideniminooxyameisensäureester der Formel XXII sind bekannte Substanzen. Sollten einige noch neu sein, so können sie in Analogie zu allgemein bekannten Methoden hergestellt werden.

Das jeweilige Molverhältnis zwischen der Verbindung der Formel XVII und den Verbindungen der Formeln XVIII-XXII richtet sich nach x, d.h. nach der Zahl der einzuführenden Resten B.

Zweckmässig werden die Verbindungen der Formeln XVIII-XXII allerdings im 2- bis 10-fachen Überschuss eingesetzt, bezogen auf deren zur Einführung von x Gruppen theoretisch notwendige Menge.

Als Lösungsmittel eignen sich beispielsweise Ether, wie Tetrahydrofuran oder Dioxan, oder Glykoläther, wie Ethylenglykol-methyläther, Ethylenglykol-ethylether, Diethylenglykol-monomethylether oder Diethylenglykol-monoethylether, ferner dipolar-aprotische Lösungsmittel, wie Acetonitril, Benzonitril, N,N-Dimethylformamid, N,N-Dimethylacetamid, Nitrobenzol, N-Methylpyrrolidon, halogenierte aliphatische oder aromatische Kohlenwasserstoffe, wie Trichlorethan, Benzol oder durch Alkyl, Alkoxy oder Halogen substituiertes Benzol, wie Toluol, Xylol, Anisol oder Chlorbenzol oder aromatische N-Heterocyclen, wie Pyridin, Picolin oder Chinolin. Bevorzugte Lösungsmittel sind z.B. Tetrahydrofuran, N,N-Dimethylformamid, N-Methylpyrrolidon. Die genannten Lösungsmittel können auch als Mischungen eingesetzt werden. Zweckmässigerweise verwendet man 5-20 Gew.-Teile Lösungsmittel auf 1 Gew.-Teil der Reaktionsteilnehmer.

Als Katalysator geeignete Basen sind beispielsweise die Alkalimetalle selbst, wie Lithium-, Natrium- oder Kalium sowie deren Hydroxide und Carbonate, oder Alkaliamide, wie Lithium-, Natrium- oder Kaliumamid oder Alkalihydride, wie Lithium-, Natrium- oder Kaliumhydrid, oder Erdalkali- oder Alkalialkoholate, die sich insbesondere von primären, sekundären oder tertiären aliphatischen Alkoholen mit 1 bis 10 C-Atomen ableiten, wie z.B. Lithium-, Natrium- oder Kaliummethylat, -ethylat, -n-propylat, -isopropylat, n-butylat, -sek.-butylat, tert.-butylat, -2-methyl-2-butylat, -2-methyl-2-pentylat, -3-methyl-3-pentylat, -3-ethyl-3-pentylat, und ferner organische aliphatische, aromatische oder heterocyclische N-Basen, darunter z.B. Diazabicyclooocten, Diazabicycloundecen und 4-Dimethylaminopyridin und Trialkylamine, wie z.B. Trimethyl- oder Triethylamin. Man kann aber auch ein Gemisch der genannten Basen verwenden.

Bevorzugt werden die organischen N-Basen, wie z.B. Diazabicyclooocten, Diazabicycloundecen und insbesondere 4-Dimethylaminopyridin.

Die Umsetzung wird bevorzugt bei Temperaturen zwischen 10 und 100°C, insbesondere zwischen 14 und 40°C, durchgeführt und zwar bei atmosphärischem Druck.

Die erfindungsgemässen Verbindungen der Formel I eignen sich ausgezeichnet als Fluoreszenzfarbstoffe zum Färben von hochmolekularem organischem Material in der Masse.

Beispiele geeigneter hochmolekularer organischer Materialien, die mit den erfindungsgemässen Verbindungen der Formel I gefärbt werden können, sind Vinylpolymere, wie z.B. Polystyrol, Poly-α-methylstyrol, Poly-p-methylstyrol, Poly-p-hydroxystyrol, Poly-p-hydroxyphenylstyrol, Poly(methylacrylat) und Poly(acrylamid) sowie die entsprechenden Methacrylverbindungen, Poly(methylmaleat), Poly(acrylnitril), Poly(methacrylnitril), Poly(vinylchlorid), Poly (vinylfluorid), Poly(vinylidenchlorid), Poly(vinylidenfluorid), Poly(vinylacetat), Poly(methylvinylether) und Poly(butylvinylether); Novolake abgeleitet von $C_1$-$C_6$-Aldehyden, wie z.B. Formaldehyd und Acetaldehyd, und einem zweikernigen, vorzugsweise einkernigen Phenol, das gegebenenfalls mit einer oder zwei $C_1$-$C_9$-Alkylgruppen, einem oder zwei Halogenatomen oder einem Phenylring substituiert ist, wie beispielsweise o-, m- oder p-Kresol, Xylol, p-tert-Butylphenol, o-, m- oder p-Nonylphenol, p-Chlorphenol oder p-Phenylphenol, oder einer Verbindung mit mehr als einer phenolischen Gruppe, wie z.B. Resorcin, Bis-(4-hydroxyphenyl)methan oder 2,2-Bis-(4-hydroxyphenyl)propan; von Maleinimid und/oder Maleinanhydrid abgeleitete Polymere, wie z.B. Copolymere von Maleinanhydrid und Styrol; Poly(vinylpyrrolidon), Biopolymere und deren Derivate, wie z.B. Cellulose, Stärke, Chitin, Chitosan, Gelatine, Zein, Ethylcellulose, Nitrocellulose, Celluloseacetat und Cellulosebutyrat; natürliche Harze und Kunstharze, wie z.B. Gummi, Casein, Silikon und Silikonharze, ABS, Harnstoff- und Melamin-Formaldehydharze, Alkydharze, Phenolharze, Polyamide, Polyimide, Polyamid/imide, Polysulfone, Polyethersulfone, Polyphenylenoxide, Polyurethane, Polyharnstoffe, Polycarbonate, Polyarylene, Polyarylensulfide, Polyepoxide, Polyolefine und Polyalkadiene. Bevorzugte hochmolekulare organische Materialien, sind z.B. Celluloseether und -ester, wie Ethylcellulose, Nitrocellulose, Celluloseacetat oder Cellulosebutyrat, natürliche Harze oder Kunstharze, wie Polymerisations- oder Kondensationsharze, wie Aminoplaste, insbesondere Harnstoff- und Melamin-Formaldehydharze, Alkydharze, Phenoplaste, Polycarbonate, Polyolefine, Polystyrol, Polyvinylchlorid, Polyamide, Polyurethane, Polyester, ABS, Polyphenylenoxide, Gummi, Casein, Silikon und Silikonharze, einzeln oder in Mischungen.

Die erwähnten hochmolekularen organischen Verbindungen können einzeln oder in Gemischen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemässen Verbindungen der Formel I als Toner oder in Form eines Präparates einzusetzen.

Besonders geeignet sind die erfindungsgemässen Verbindungen der Formel I zum Massefärben von Polyvinylchlorid und insbesondere Polyolefinen, wie Polyethylen und Polypropylen, sowie von Lacken, auch von Pulverlakken, Druckfarben und Anstrichstoffen.

Bezogen auf das zu färbende hochmolekulare organische Material kann man die erfindungsgemässen Verbindungen der Formel I in einer Menge von 0,01 bis 30 Gew.%, vorzugsweise von 0,1 bis 10 Gew. %, einsetzen.

Die Einfärbung der hochmolekularen organischen Substanzen mit den erfindungsgemässen Verbindungen der Formel I erfolgt beispielsweise derart, dass man die Verbindung der Formel I, gegebenenfalls in Form von Masterbatches, diesen Substraten unter Verwendung von Walzwerken, Misch- oder Mahlapparaten zumischt. Das gefärbte Material wird hierauf nach an sich bekannten Verfahren, wie Kalandrieren, Pressen, Strangpressen, Streichen, Giessen oder Spritzgiessen, in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung der erfindungsgemässen Verbindungen der Formel I in die Polymeren eingearbeitet werden. Zwecks Erzielung verschiedener Farbtöne ist es ferner möglich, den hochmolekularen organischen Stoffen neben der erfindungsgemässen Verbindung noch Füllstoffe bzw. andere farbgebende Bestandteile, wie Weiss-, Bunt- oder Schwarzpigmente, in beliebigen Mengen zuzufügen.

Zum Einfärben von Lacken, Anstrichstoffen und Druckfarben werden die hochmolekularen organischen Materialien und die erfindungsgemässen Verbindungen der Formel I gegebenenfalls zusammen mit Zusatzstoffen, wie Füllmitteln, Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

In Färbungen, beispielsweise von Polyvinylchlorid oder Polyolefinen oder in Druckfarben, zeichnen sich die erfindungsgemässen Verbindungen der Formel I durch gute allgemeine Eigenschaften, wie gute Migrations-, Licht- und Wetterbeständigkeit, aber insbesondere durch die unerwartet hohe Fluoreszenz aus.

Von ganz grosser Bedeutung ist aber die ganz unerwartete Leichtigkeit mit der die erfindungsgemässen löslichen Chromophore, selbst im Substrat in welchem sie bereits eingearbeitet wurden, zu den entsprechenden Pigmenten der Formel $A(H)_x$ umgewandelt werden können. Dies kann auf einfachste Weise erzielt werden, sei es durch thermische (Aufheizen auf Temperaturen zwischen 50 und 400°C, bevorzugt zwischen 100 und 200°C oder Laserbestrahlung), photolytische (Belichtung z.B. mit Wellenlängen unter 375 nm) oder chemische (mit organischen oder anorganischen Säuren oder Basen) Behandlung der die erfindungsgemässen löslichen Chromophore enthaltenden Festkörper, Lösungen oder Dispersionen in organischen oder wässrigen Medien, Polymerlösungen oder Schmelzen. Die erwähnten Umwandlungsmethoden können auch kombiniert werden. Dies erlaubt die Einfärbung von Lacken, Druckfarben, insbesondere für Inkjet und Kunststoffen, auch z.B. in Faserform, mit insgesamt verbesserten Eigenschaften, wie Reinheit, Farbstärke, Brillianz und Transparenz, sowie interessante Applikationen in der Analytik.

Ein weiterer Gegenstand der Erfindung betrifft demnach ein Verfahren zur Einfärbung eines hochmolekularen organischen Materials in der Masse durch thermische, photolytische oder chemische Behandlung eines eine Verbindung der Formel I enthaltenden Materials, wobei die Verbindung der Formel I in situ in ein Pigment der Formel $A(H)_x$, umgewandelt wird. Die Erfindung betrifft zudem auch ein thermo-, photo- oder chemosensitives Aufzeichnungsmaterial und photo- und elektrolumineszente Materialien enthaltend ein erfindungsgemässes lösliches Chromophor der Formel I.

Es ist sogar gefunden worden, dass im Fall bestimmter Chromophore der Formel I die chemische Behandlung mit einer organischen oder anorganischen Säure bei 50 bis 180°C, bevorzugt 80-160°C, und anschliessende Abkühlung, zweckmässig um etwa 70-100°C, oder die thermische Behandlung durch Erhitzen auf Temperaturen von 180-350°C, zu Kristallmodifikationsumwandlungen der entsprechenden Chromophore XVII führen kann.

Ein zusätzlicher Gegenstand der Erfindung ist daher auch ein Verfahren zur Kristallmodifikationsumwandlung von Chromophoren der Formel XVII

a) durch chemische Behandlung mit einer organischen oder anorganischen Säure bei 50 bis 180°C und anschliessende Abkühlung, oder
b) durch thermische Behandlung bei Temperaturen zwischen 180 und 350°C

eines Chromophors der Formel I.

Die nachfolgenden Beispiele erläutern die Erfindung.

Beispiel 1: Zu einer Mischung von 1,8 g (0,00576 Mol) Chinacridon und 0,3g (0,00246 Mol) 4-Dimethylaminopyridin in 90 ml N,N-Dimethylformamid werden 6,0 g (0,0275 Mol) Di-tert.-butyldicarbonat gegeben. Die erhaltene violette Suspension wird über Nacht bei Raumtemperatur unter Ausschluss von atmosphärischer Feuchtigkeit gerührt. Die Farbe schlägt dabei auf gelborange um. Danach wird die Reaktionsmischung unter Rühren in 100 ml destilliertem Wasser gegossen. Der gelbe Niederschlag wird abfiltriert und der Rückstand mit destilliertem Wasser gewaschen und getrocknet. Man erhält 2,8 g (95 % d.Th) eines Produktes der Formel

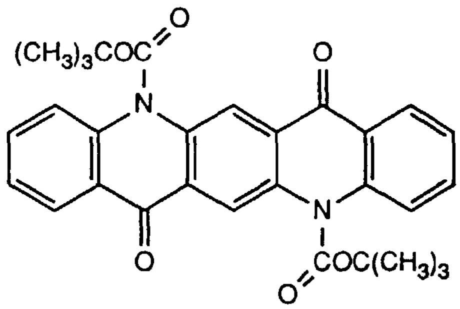

Analyse:

$^1H$-NMR($CDCl_3$): 8,74 (s, 2H); 8,41 (d, 2H); 7,84 (d, 2H); 7,72 (t, 2H); 7,38 (t, 2H); 1,75 (s, 18H).

Beispiel 2: Zu einer Suspension von 10,31 g (0,0393 Mol) Indigo und 2,79 g (0,0228 Mol) 4-Dimethylaminopyridin in 150 ml N,N-Dimethylformamid werden, in zwei Portionen, 45,31 g (0,2076 Mol) Di-tert.-butyldicarbonat gegeben. Das Gemisch wird 20 Stunden bei Raumtemperatur gerührt, wobei die Farbe von Dunkelblau auf Violett umschlägt. Das Produkt wird abfiltriert und der Rückstand wird zuerst mit 20 ml Dimethylformamid, dann mit destilliertem Wasser gewaschen und getrocknet. Man erhält 9,79 g eines brillanten roten Festkörpers. Zusätzliche 5,13 g des Produktes erhält man beim Verdünnen des Filtrates mit destilliertem Wasser. Die Gesamtausbeute beträgt demnach 14,93 g (82,1 % d.Th.) eines Produktes der Formel

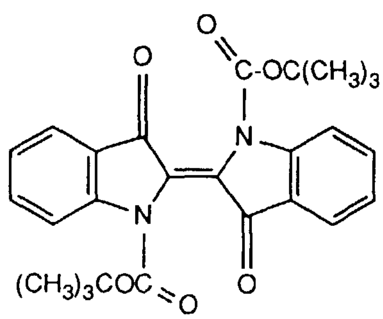

Analyse:

$^1H$-NMR($CDCl_3$): 8,02 (d, 2H); 7,76 (d, 2H); 7,61 (t, 2H); 7,21 (t, 2H); 1,62 (s, 18H).

Beispiel 3: Zu einer Mischung von 1,5 g (0,00337 Mol) des Pigments der Formel

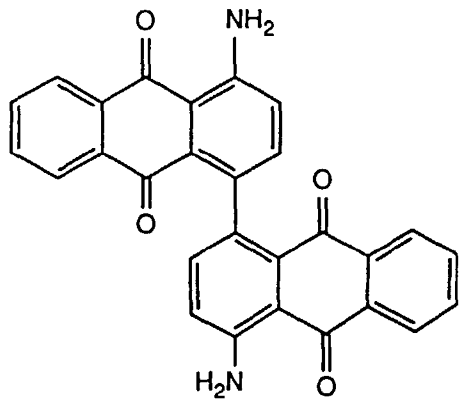

und 9,7 g (0,0444 Mol) Di-tert.-butyldicarbonat in 80 ml N,N-Dimethylacetamid werden 0,18 g (0,00147 Mol) 4-Dimethylaminopyridin gegeben. Die erhaltene Suspension wird 24 Stunden bei Raumtemperatur gerührt. Die Reaktionsmischung wird danach unter Rühren in 200 ml destilliertem Wasser gegossen. Der gelbe Niederschlag wird abfiltriert und der Rückstand wird mit destilliertem Wasser gewaschen und bei Raumtemperatur im Vakuum getrocknet. Man erhält 2,71 g (95 % d.Th.) eines Produktes der Formel

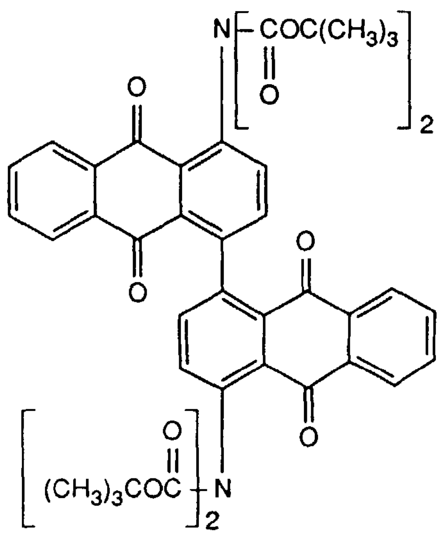

Analyse:

$^1$H-NMR($CDCl_3$): 8,22 (d, 2H); 7,83 (d, 2H); 7,72 (t, 2H); 7,63 (t, 2H); 7,56 (d, 2H); 7,42 (d, 2H); 1,45 (s, 36H).

Beispiel 4: Zu einer Mischung von 1,4 g (0,0037 Mol) eines Monoazopigments der Formel

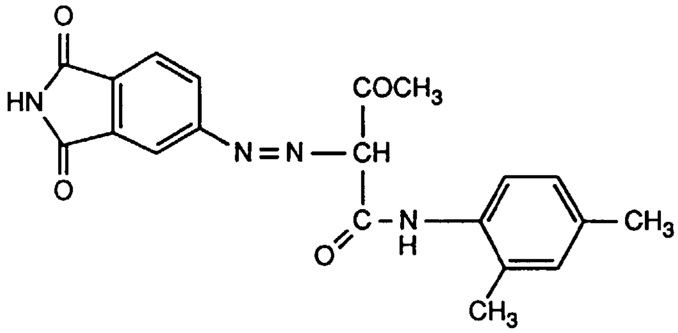

und 2,67 g (0,01221 Mol) Di-tert.-butyldicarbonat in 50 ml N,N-Dimethylacetamid werden 0,2 g (0,00164 Mol) 4-Dimethylaminopyridin gegeben. Die Reaktionsmischung wird 48 Stunden bei Raumtemperatur gerührt. Es entsteht eine orangefarbene Suspension. Der gelbe Niederschlag wird dann abfiltriert und der Rückstand wird mit wenig N,N-Dimethylacetamid und danach mit destilliertem Wasser gewaschen und bei Raumtemperatur im Vakuum getrocknet. Man erhält 0,67 g (31 % d.Th.) eines Produktes der Formel

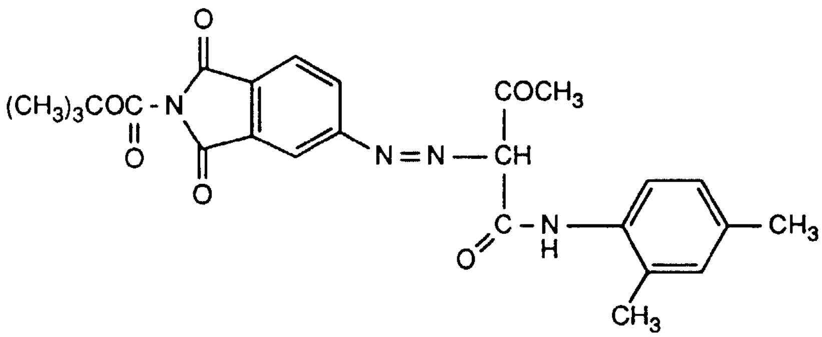

Analyse:

$^1$H-NMR($CDCl_3$): 15,9 (s, br, 1H); 11,17 (s, br, 1H); 7,94 (d, 1H); 7,90 (s, 1H); 7,85 (d, 1H); 7,64 (d, 1H); 7,06-7,04 (m, 2H); 2,65 (s, 3H); 2,35 (s, 3H); 2,32 (s, 3H); 1,64 (s, 9H).

Beispiel 5: 0,07 g des Produktes aus Beispiel 1 werden in einem Reagenzglas 10 Minuten bei 180°C erhitzt. Alle analytischen Daten des entstehenden violetten Pulvers entsprechen denjenigen von reinem Chinacridon der Formel

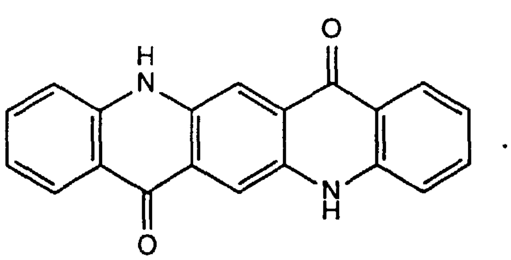

Die Ausbeute der Umwandlung beträgt 99 %.

Beispiel 6: 0,07 g des Produktes aus Beispiel 3 werden in 1 ml Aceton gelöst und anschliessend auf einmal

1 ml 33%ige HCl zugegeben. Alle analytischen Daten des ausgefallenen roten Pulvers entsprechen denjenigen des reinen Pigments der Formel

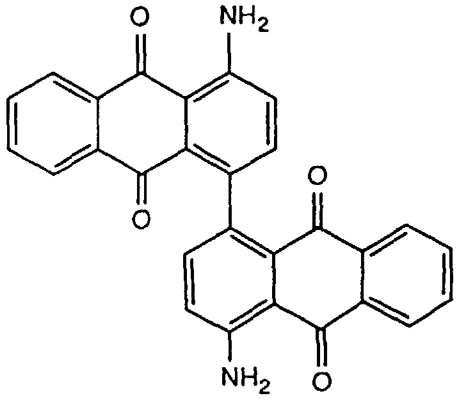

.

Die Ausbeute der Umwandlung beträgt 99 %.

Beispiele 7-10: In analoger Weise wie in Beispiel 1 können, bei Verwendung entsprechender Dicarbonate, die in der nachstehenden Tabelle angeführten Verbindungen der Formel

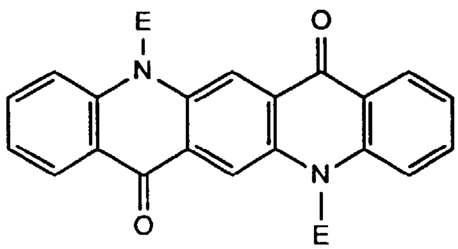

erhalten werden.

| Beispiel | E | Lösungsmittel | Reaktionszeit | Ausbeute | Farbe |
|---|---|---|---|---|---|
| 7 | 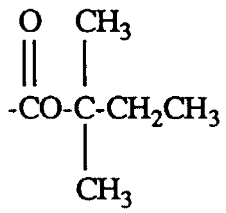 | DMF | 30 Std. | 80 % | Gelborange |
| 8 | 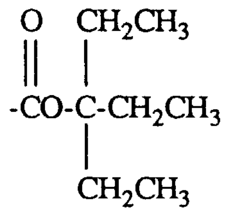 | DMF | 24 Std. | 30 % | Gelborange |
| 9 | 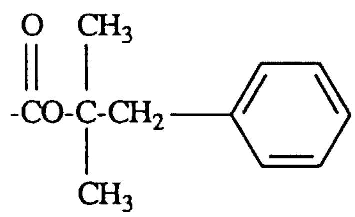 | DMF | 16 Std. | 80 % | Gelborange |
| 10 | 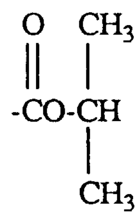 | DMF | 24 Std. | 35 % | Gelborange |

DMF = Dimethylformamid

Beispiel 11: Zu einer Suspension von 1,03 g des Produktes aus Beispiel 1 in 30 ml N,N'-Dimethylformamid und 10 ml Wasser werden 4 ml Trifluoressigsäure zugegeben. Die Mischung wird auf 105°C geheizt, 2 Stunden bei dieser Temperatur gerührt und anschliessend im Eisbad auf 20°C abgeschreckt. Das ausgefallene Pigment wird abfiltriert, mit Methanol und dann mit Wasser gewaschen und im Vakuum bei 60°C getrocknet. Man erhält 0,59 g eines roten Pulvers. Das Röntgenbeugungsdiagramm ist durch folgende Beugungslinien

| Netzebenenabstände (d-Werte in Å) | doppelte Glanzwinkel (2Θ) | relative Intensität |
|---|---|---|
| 15,0530 | 5,87 | 100 |
| 7,5164 | 11,76 | 45 |
| 5,5635 | 15,92 | 27 |
| 4,0350 | 22,01 | 21 |
| 3,7534 | 23,69 | 9 |
| 3,2870 | 27,11 | 61 |
| 2,9988 | 29,77 | 5 |
| 2,3129 | 38,91 | 5 |

gekennzeichnet (β-Modifikation von Chinacridon).

Beispiel 12: Eine Mischung von 4,75 g Toluol-4-sulfonsäure und 100 ml Diphenylether wird auf 150°C geheizt. Zur entstandenen Lösung werden dann 1,03 g des Produktes aus Beispiel 1 gelöst in 150 ml Tetrahydrofuran innerhalb von 5 Stunden bei 150°C zudosiert. Das unter diesen Reaktionsbedingungen rasch verdampfende Tetrahydrofuran wird via Liebigkühler kondensiert und in eine Vorlage aufgefangen. Das Reaktionsgemisch wird bei 150°C 2 Stunden weitergerührt und anschliessend auf 60°C abgekühlt. Das ausgefallene Pigment wird abfiltriert, mit Methanol und danach mit Wasser gewaschen und im Vakuum bei 60°C getrocknet. Man erhält 0,67 g eines roten Pulvers.

Das Röntgenbeugungsdiagramm ist durch folgende Beugungslinien

| Netzebenenabstände (d-Werte in Å) | doppelte Glanzwinkel (2Θ) | relative Intensität |
|---|---|---|
| 13,6841 | 6,45 | 100 |
| 6,7972 | 13,01 | 43 |
| 6,6153 | 13,37 | 52 |
| 6,4440 | 13,73 | 84 |
| 5,5678 | 15,91 | 5 |
| 5,2536 | 16,86 | 10 |
| 4,3559 | 20,37 | 14 |
| 3,7526 | 23,69 | 14 |
| 3,5632 | 24,97 | 11 |
| 3,3796 | 26,35 | 66 |
| 3,3583 | 26,52 | 55 |
| 3,2065 | 27,80 | 7 |
| 3,1306 | 28,49 | 7 |
| 2,9534 | 30,24 | 6 |
| 2,4576 | 36,53 | 5 |
| 2,2135 | 40,73 | 7 |

gekennzeichnet (γ-Modifikation von Chinacridon).

## Patentansprüche

1. Verbindungen der Formel

$$A(B)_x \qquad (I),$$

worin

A für den Rest eines Farbstoffes der Chinacridon-, 4,4'-Diamino-1,1'-dianthrachinonyl-, Indanthron, Perylen-, Indigo-, Chinophthalon-, Isoindolinon-, Isoindolin-, Dioxazin-, Phthalocyanin- oder Arylazo-acetoacetamido-aryl-reihe steht,

der N-Atome enthält, woran die x Gruppen B verbunden sind,

B eine Gruppe der Formel

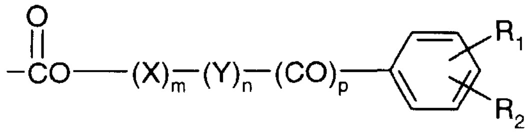

(II),

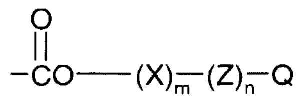

(III)

oder

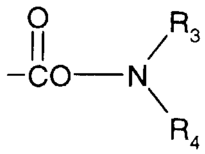

(IV)

ist, und wenn x 2 oder mehr bedeutet, auch ein- bis z-mal Wasserstoff sein kann, wobei z gleich x-1 ist, und

x eine ganze Zahl von 1 bis 4 oder, wenn A für einen Rest

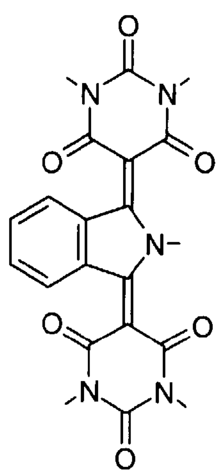

steht, die Zahl 5 bedeutet,

wobei in den Formeln II, III und IV

| | |
|---|---|
| m, n und p | unabhängig voneinander Null oder 1 sind, |
| X | $C_1$-$C_{14}$-Alkylen oder $C_2$-$C_8$-Alkenylen, |
| Y | eine Gruppe -V-$(CH_2)_q$-, |
| Z | eine Gruppe -V-$(CH_2)_r$-, |
| V | $C_3$-$C_6$-Cycloalkylen, |
| q | eine Zahl von 1 bis 6 und |
| r | eine Zahl von Null bis 6 bedeuten, |

$R_1$ und $R_2$ unabhängig voneinander Wasserstoff, $C_1$-$C_6$-Alkyl, $C_1$-$C_4$-Alkoxy, Halogen, CN, $NO_2$, unsubstituiertes oder durch $C_1$-$C_4$-Alkyl, $C_1$-$C_4$-Alkoxy oder Halogen substituiertes Phenyl oder Phenoxy sind,

Q Wasserstoff, CN, $Si(R_1)_3$,

eine Gruppe $C(R_5)(R_6)(R_7)$,
worin $R_5$, $R_6$ und $R_7$ unabhängig voneinander Wasserstoff oder Halogen sind und mindestens einer der Reste $R_5$, $R_6$ und $R_7$ Halogen bedeutet,
eine Gruppe

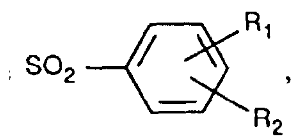 ,

worin $R_1$ und $R_2$ die oben angegebene Bedeutung haben,
eine Gruppe $SO_2R_8$ oder $SR_8$, worin $R_8$ $C_1$-$C_4$-Alkyl ist,
eine Gruppe $CH(R_9)_2$, worin $R_9$ unsubstituiertes oder durch $C_1$-$C_4$-Alkyl, $C_1$-$C_4$-Alkoxy oder Halogen substituiertes Phenyl bedeutet,

oder
eine Gruppe der Formel

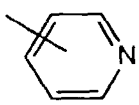 , 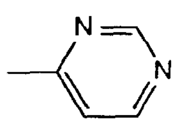 , 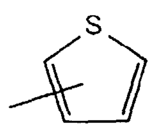 , 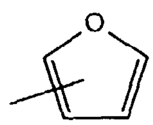 ,

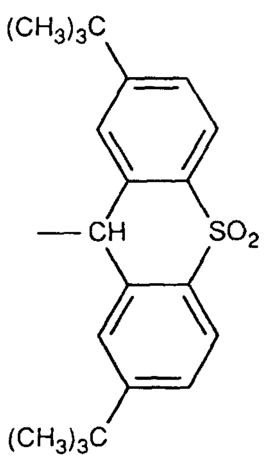 , 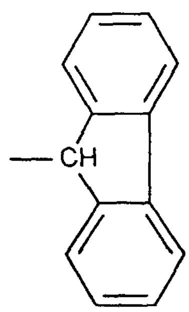 , 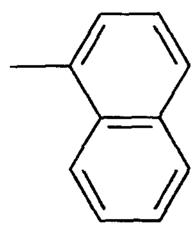 oder 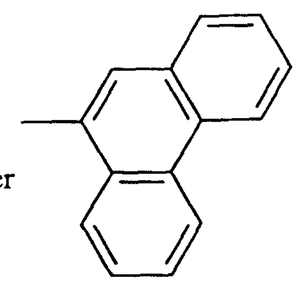

bedeutet,
$R_3$ und $R_4$ unabhängig voneinander Wasserstoff, $C_1$-$C_{18}$-Alkyl, eine Gruppe

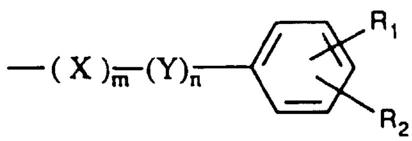,

worin X, Y, $R_1$, $R_2$, m und n die oben angegebene Bedeutung haben, oder $R_3$ und $R_4$ zusammen mit dem Stickstoffatom an dem sie gebunden sind einen Pyrrolidinyl-, Piperidinyl- oder Morpholinylrest bilden, mit der Massgabe, dass $A(B)_x$ nicht gleich

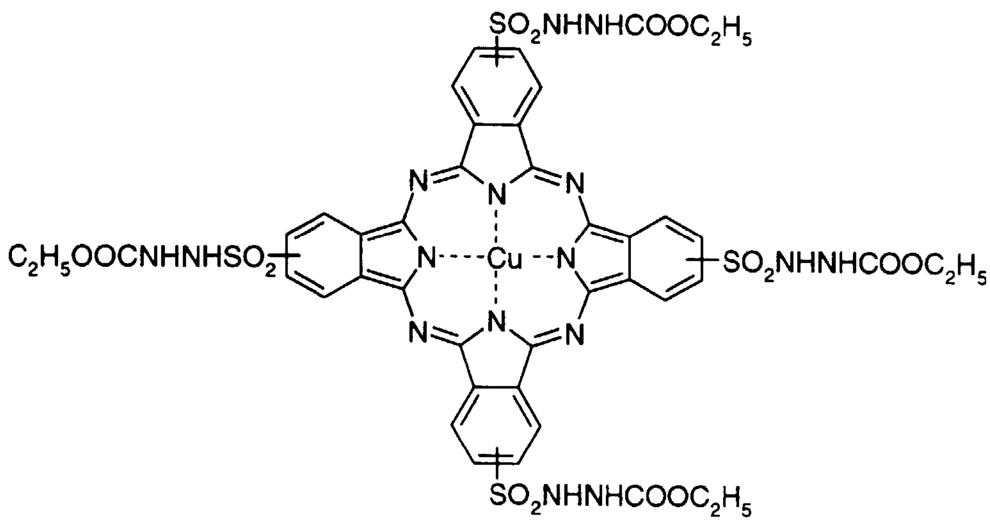

ist.

2. Verbindungen der Formel I gemäss Anspruch 1, dadurch gekennzeichnet, dass x 1 oder 2 ist und B eine Gruppe der Formel

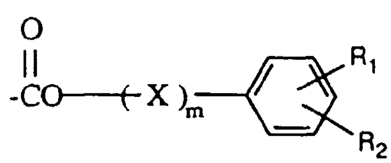

(V),

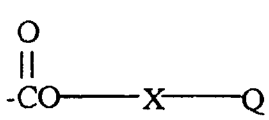

(VI) oder (IV)

ist, und, wenn x 2 bedeutet, auch einmal Wasserstoff sein kann, wobei in den Formeln IV, V und VI

| | |
|---|---|
| m | Null oder 1 bedeutet, |
| X | $C_1$-$C_4$-Alkylen oder $C_2$-$C_5$-Alkenylen ist, |
| $R_1$ und $R_2$ | unabhängig voneinander Wasserstoff, $C_1$-$C_4$-Alkyl, Methoxy, Chlor oder $NO_2$ bedeuten, und |
| Q | Wasserstoff, CN, $CCl_3$, eine Gruppe |

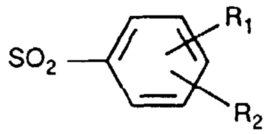,

$SO_2CH_3$ oder $SCH_3$,

$R_3$ und $R_4$ unabhängig voneinander Wasserstoff, $C_1$-$C_4$-Alkyl oder eine Gruppe

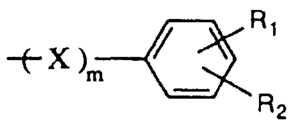

bedeuten,

oder $R_3$ und $R_4$ zusammen einen Piperidinylrest bilden.

**3.** Verbindungen der Formel I gemäss Anspruch 1, dadurch gekennzeichnet, dass x 2 bedeutet und B zweimal eine Gruppe der Formel

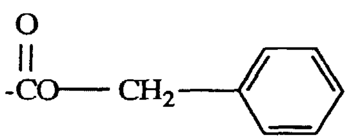 , 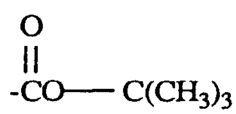 , 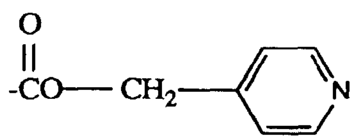,

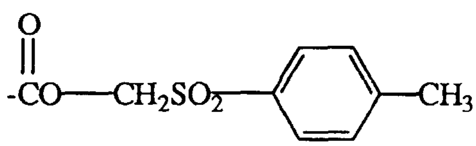 oder 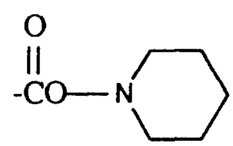

bedeutet.

**4.** Verbindungen der Formel I gemäss Anspruch 1, dadurch gekennzeichnet, dass es sich um Perylencarbonsäureimide der Formeln

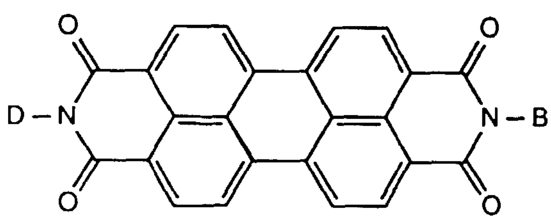

(VIIa)

oder

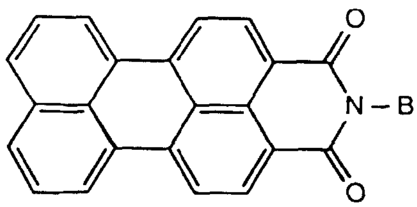

(VIIb),

worin D Wasserstoff, $C_1$-$C_6$-Alkyl, unsubstituiertes oder durch Halogen oder $C_1$-$C_4$-Alkyl substituiertes Phenyl, Benzyl oder Phenethyl oder B bedeutet, und B die in Anspruch 1 angegebene Bedeutung hat, handelt.

**5.** Verbindungen der Formel I gemäss Anspruch 1, dadurch gekennzeichnet, dass es sich um Chinacridone der Formel

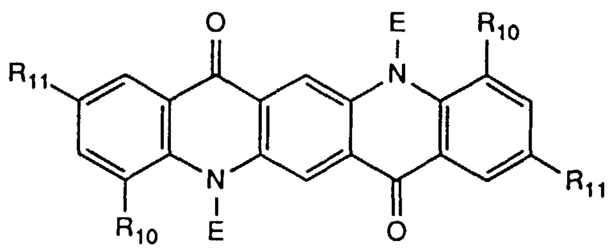

(VIII),

worin $R_{10}$ und $R_{11}$ unabhängig voneinander Wasserstoff, Halogen, $C_1$-$C_{18}$-Alkyl, $C_1$-$C_4$-Alkoxy oder Phenyl sind und E Wasserstoff oder B bedeutet, mit der Massgabe, dass E mindestens einmal B ist, handelt.

**6.** Verbindungen der Formel I gemäss Anspruch 1, dadurch gekennzeichnet dass es sich um Dioxazine der Formel

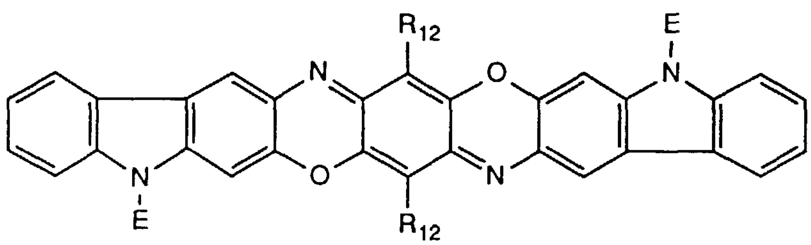

(IX),

worin $R_{12}$ Wasserstoff, Halogen oder $C_1$-$C_{18}$-Alkyl ist, und E Wasserstoff oder B bedeutet, mit der Massgabe, dass E mindestens einmal B ist, handelt.

**7.** Verbindungen der Formel I gemäss Anspruch 1, dadurch gekennzeichnet dass es sich um Isoindoline der Formeln

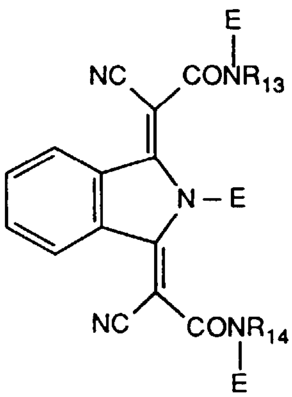
,
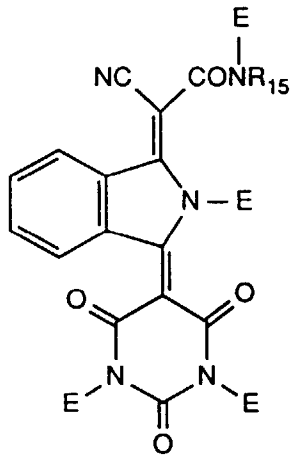
oder
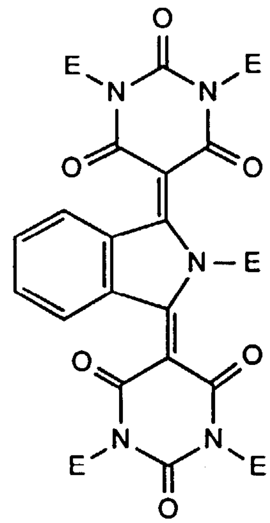

(X) (XI) (XII)

worin $R_{13}$ eine Gruppe

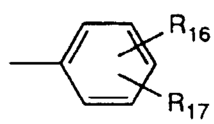

ist,

| | |
|---|---|
| $R_{14}$ | Wasserstoff, $C_1$-$C_{18}$-Aklyl, Benzyl oder eine Gruppe 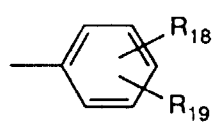 bedeutet |
| $R_{15}$ | die gleiche Bedeutung wie $R_{13}$ hat, |
| $R_{16}$, $R_{17}$, $R_{18}$ und $R_{19}$ | unabhängig voneinander Wasserstoff, $C_1$-$C_{18}$-Alkyl, $C_1$-$C_4$-Alkoxy, Halogen oder Trifluormethyl bedeuten, |

und E Wasserstoff oder B bedeutet, mit der Massgabe, dass E mindestens einmal B ist, handelt.

**8.** Verbindungen der Formel I gemäss Anspruch 1, dadurch gekennzeichnet, dass es sich um Indigoderivate der Formel

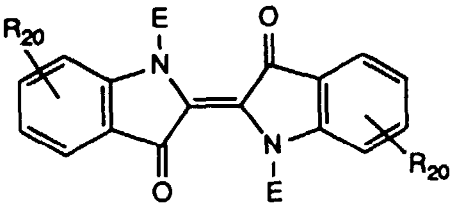

(XIII),

worin $R_{20}$ Wasserstoff, CN, $C_1$-$C_4$-Alkyl, $C_1$-$C_4$-Alkoxy oder Halogen bedeutet, und E Wasserstoff oder B bedeutet, mit der Massgabe, dass E mindestens einmal B ist, handelt.

**9.** Verbindungen der Formel I gemäss Anspruch 1, dadurch gekennzeichnet, dass es sich um Azoverbindungen der Formel

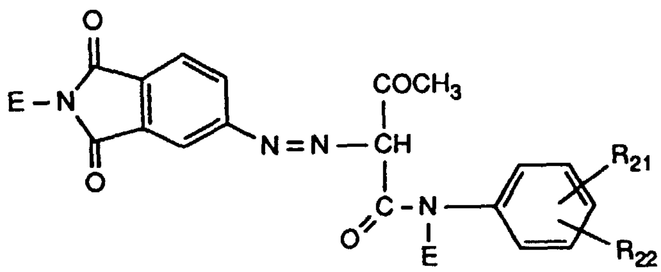

(XIV),

worin $R_{21}$ und $R_{22}$ unabhängig voneinander Wasserstoff, Halogen, $C_1$-$C_4$-Alkyl oder $C_1$-$C_4$-Alkoxy sind, und E Wasserstoff oder B bedeutet, mit der Massgabe, dass E mindestens einmal B ist, handelt.

**10.** Verbindungen der Formel I gemäss Anspruch 1, dadurch gekennzeichnet, dass es sich um anthrachinoide Verbindungen der Formel

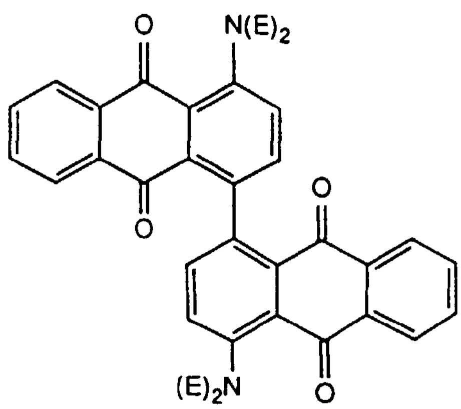

(XV),

worin E Wasserstoff oder B bedeutet, mit der Massgabe, dass E mindestens einmal B ist, handelt.

**11.** Verbindungen der Formel I gemäss Anspruch 1, dadurch gekennzeichnet, dass es sich um Phthalocyanine der Formel

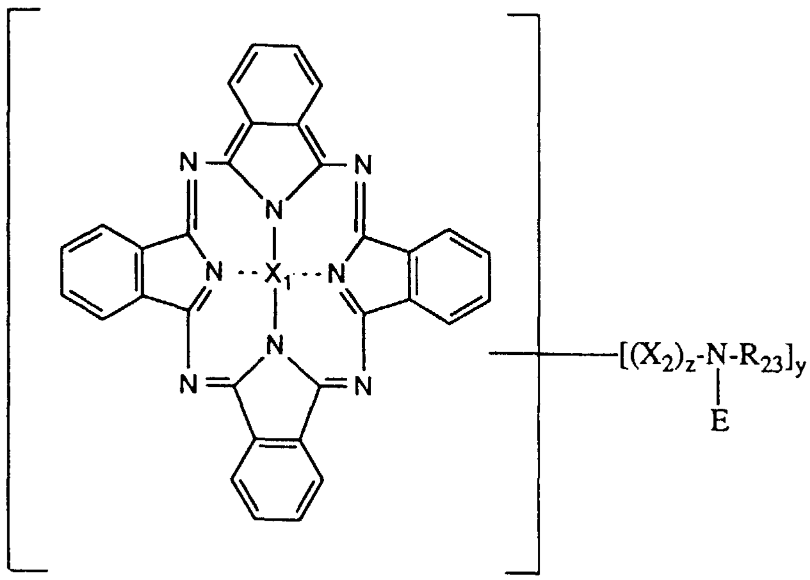

(XVI)

handelt, worin

$X_1$ $H_2$, Zn, Cu, Ni, Fe oder V,
$X_2$ $-CH(R_{24})-$ oder $-SO_2-$
$R_{23}$ Wasserstoff, $C_1$-$C_4$-Alkyl, $-N(E)R_{24}$, $-NHCOR_{25}$, $-COR_{25}$ oder

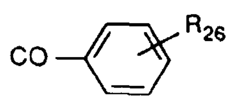
,

$R_{24}$ Wasserstoff oder $C_1$-$C_4$-Alkyl, $R_{25}$ $C_1$-$C_4$-Alkyl und $R_{26}$ Wasserstoff, Halogen, $C_1$-$C_4$-Alkyl oder $C_1$-$C_4$-Alkoxy bedeuten,
z für Null oder 1 und y für eine Zahl von 1 bis 4 stehen, und E Wasserstoff oder B bedeutet, mit den Massgaben, dass E mindestens einmal B ist und wenn $X_1$ gleich Cu, $X_2$ gleich $SO_2$, $R_{23}$ gleich $-N(E)R_{24}$ und $R_{24}$ gleich Wasserstoff sind, das Phthalocyanin der Formel (XVI) nicht der Formel

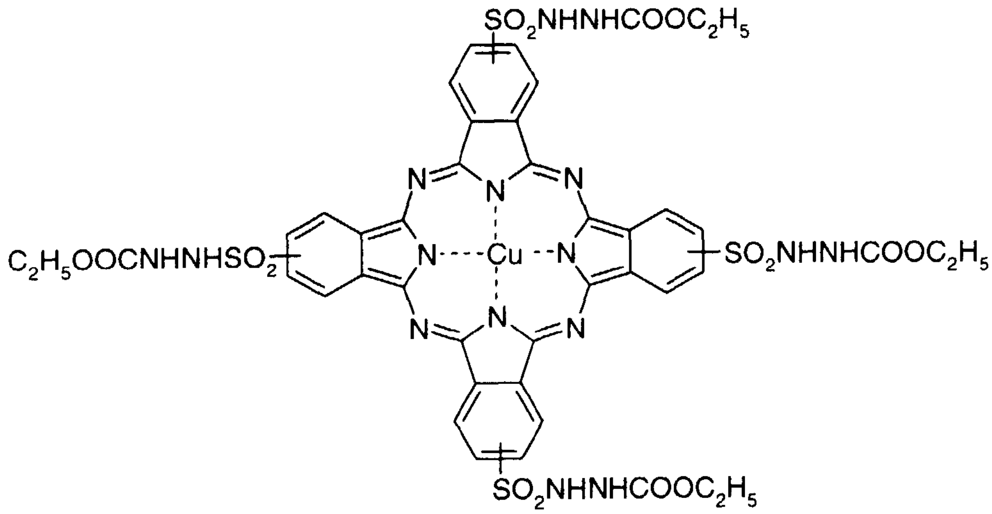

ist.

**12.** Verfahren zur Herstellung von Verbindungen der Formel I, worin die Anzahl der Gruppen B, welche nicht Wasserstoff sind, gleich z ist, wobei z eine Zahl von 1 bis x ist, dadurch gekennzeichnet, dass eine Verbindung der Formel

$$A(H)_x, \quad (XVII)$$

worin A und x die im Anspruch 1 angegebene Bedeutung haben,
im Molverhältnis von $\frac{1}{z}$ : 2 bis $\frac{1}{z}$ : 10 ,
mit einem Dicarbonat der Formel

$$B - O - B \quad (XVIII)$$

oder mit einem Trihaloessigsäureester der Formel

$$(R_{27})_3C - B \quad (XIX),$$

oder mit einem Azid der Formel

$$BN_3 \quad (XX),$$

oder mit einem Carbonat der Formel

$$B\text{-}OR_{28} \quad (XXI),$$

oder mit einem Alkylideniminooxyameisensäureester der Formel

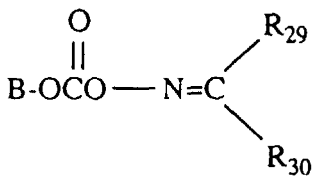

(XXII),

worin B jeweils die oben angegebene Bedeutung hat, $R_{27}$ Chlor, Fluor oder Brom, $R_{28}$ $C_1$-$C_4$-Alkyl oder unsubstituiertes oder durch Halogen, $C_1$-$C_4$-Alkyl, $C_1$-$C_4$-Alkoxy oder -CN substituiertes Phenyl, $R_{29}$ -CN oder -$COOR_{28}$ und $R_{30}$ unsubstituiertes oder durch Halogen, $C_1$-$C_4$-Alkyl, $C_1$-$C_4$-Alkoxy oder -CN substituiertes Phenyl bedeuten, in einem aprotischen organischen Lösungsmittel in Gegenwart einer Base als Katalysator, umgesetzt wird.

**13.** Verfahren gemäss Anspruch 12, dadurch gekennzeichnet, dass die Verbindung der Formel XVII mit einem Dicarbonat der Formel XVIII umgesetzt wird.

**14.** Hochmolekulares organisches Material enthaltend in der Masse eine Verbindung der Formel I gemäss Anspruch 1 als Fluoreszenzfarbstoff.

**15.** Verfahren zur Einfärbung eines hochmolekularen organischen Materials in der Masse durch thermische, photolytische oder chemische Behandlung eines Materials gemäss Anspruch 14, wobei die Verbindung der Formel I gemäss Anspruch 1 in situ in ein Pigment der Formel $A(H)_x$, umgewandelt wird, worin A und x die in Anspruch 1 angegebene Bedeutung haben.

**16.** Thermo-, photo- oder chemosensitives Aufzeichnungsmaterial enthaltend ein lösliches Chromophor der Formel I gemäss Anspruch 1.

**17.** Photo- und elektrolumineszente Materialien enthaltend ein lösliches Chromophor der Formel I gemäss Anspruch 1.

**18.** Verfahren zur Herstellung eines kristallinen Pigments der Formel $A(H)_x$ (XXIII), worin A und x die in Anspruch 1 angegebene Bedeutung haben, dadurch gekennzeichnet, dass eine Verbindung der Formel I gemäss Anspruch 1

a) bei 50 bis 180°C mit einer organischen oder anorganischen Säure behandelt und anschliessend abgekühlt wird; oder

b) bei 180 bis 350°C thermisch behandelt wird.

**19.** Verfahren gemäss Anspruch 18, worin eine gemäss Anspruch 12 hergestellte Verbindung der Formel I verwendet wird.

**20.** Verfahren gemäss Anspruch 19, worin das kristalline Pigment der Formel XXIII eine Kristallmodifikation aufweist, welche von der Kristallmodifikation der Verbindung der Formel XVII unterschiedlich ist.

## Claims

**1.** A compound of formula

$$A(B)_x \qquad (I),$$

wherein

A is the radical of a dye of the quinacridone, 4,4'-diamino-1,1'-dianthraquinonyl, indanthrone, perylene, indigo, quinophthalone, isoindolinone, isoindoline, dioxazine, phthalocyanine or arylazo-acetoacetamidoaryl series, which radical contains N atoms to which the x groups B are connected,

B is a group of formula

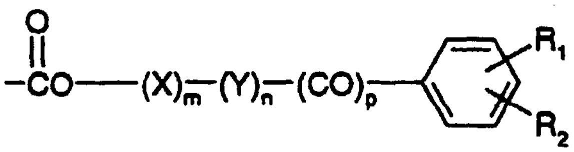

(II),

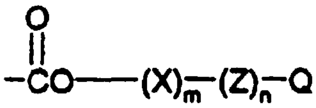

(III)

or

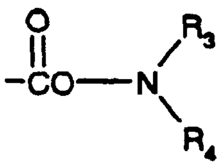

(IV)

and, if x is 2 or more, B may also be hydrogen from one to z times, z being equal to x-1, and

x is an integer from 1 to 4 or, if A is a radical

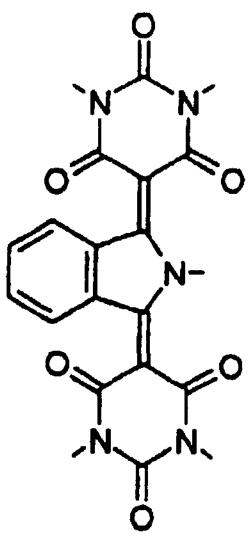

is the number 5,

and in formulae II, III and IV

m,n and p are each independently of one another zero or 1,
X is $C_1$-$C_{14}$alkylene or $C_2$-$C_8$alkenylene,

Y is a group $-V-(CH_2)_q-$,
Z is a group $-V-(CH_2)_{r-}$,
V is $C_3$-$C_6$cycloalkylene,
q is a number from 1 to 6, and
r is a number from zero to 6,
$R_1$ and $R_2$ are each independently of the other hydrogen, $C_1$-$C_6$alkyl, $C_1$-$C_4$alkoxy, halogen, CN, $NO_2$, unsubstituted phenyl or phenoxy or phenyl or phenoxy which are substituted by $C_1$-$C_4$alkyl, $C_1$-$C_4$alkoxy or halogen,
Q is hydrogen, CN, $Si(R_1)_3$,
a group $C(R_5)(R_6)(R_7)$,

wherein $R_5$, $R_6$ and $R_7$ are each independently of one another hydrogen or halogen and at least one of $R_5$, $R_6$ and $R_7$ is halogen, a group

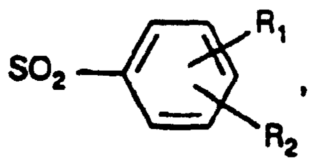,

wherein $R_1$ and $R_2$ are as defined above,
a group $SO_2R_8$ or $SR_8$, wherein $R_8$ is $C_1$-$C_4$alkyl,
is a group $CH(R_9)_2$, wherein $R_8$ is unsubstituted phenyl or phenyl which is substituted by $C_1$-$C_4$alkyl, $C_1$-$C_4$alkoxy or halogen,
or
is a group of formula

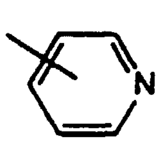, 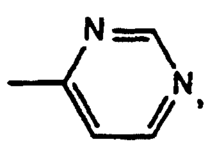, 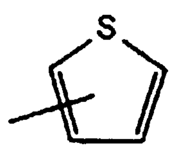, 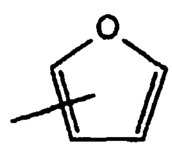,

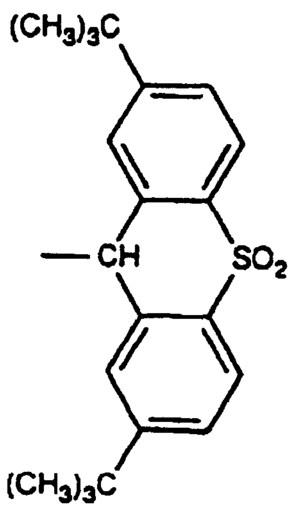, 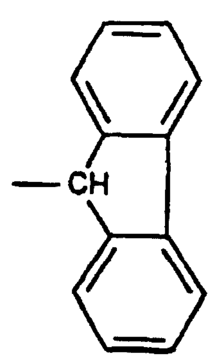, 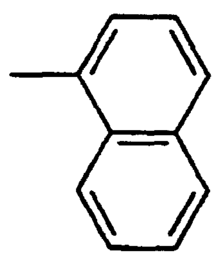

or

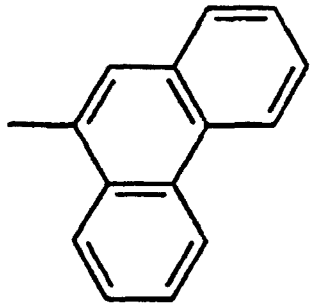

,

$R_3$ and $R_4$ are each independently of the other hydrogen, $C_1$-$C_{18}$alkyl, a group

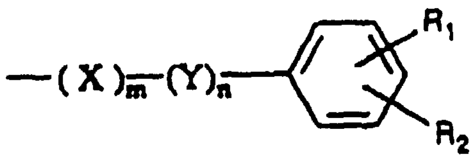

,

wherein X,Y,$R_1$,$R_2$, m and n are as defined above, or $R_3$ and $R_4$, together with the nitrogen above to which they are attached form a pyrrolidinyl, piperidinyl or morpholinyl radical, with the proviso that $A(B)_x$ is not

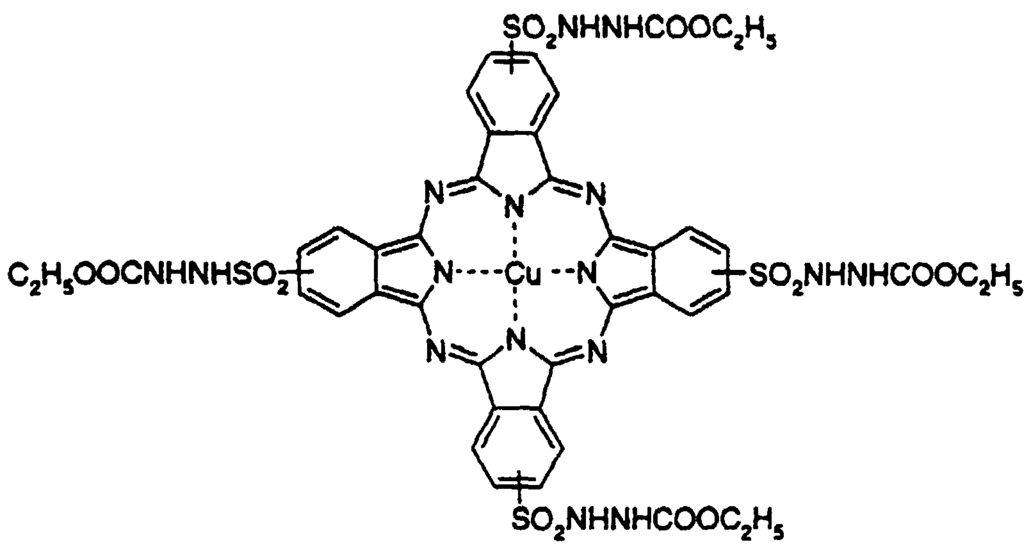

2. A compound of formula I according to claim 1, wherein x is 1 or 2 and B is a group of formula

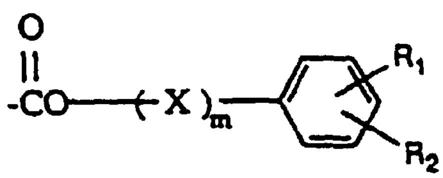

(V),

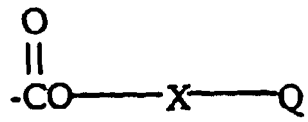

(VI) or (IV)

and, is x is 2, may also be one hydrogen atom, and in formulae IV,V and VI

m is zero or 1,
X is $C_1$-$C_4$alkylene or $C_2$-$C_5$alkenylene,
$R_1$ and $R_2$ are each independently of the other hydrogen, $C_1$-$C_4$alkyl, methoxy, chloro or $NO_2$, and
Q is hydrogen, CN, $CCl_3$, a group

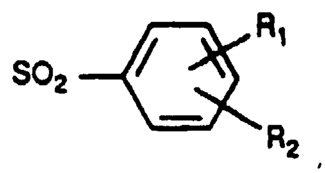

,

$SO_2CH_3$ or $SCH_3$, $R_3$ and $R_4$ are each independently of the other hydrogen, $C_1$-$C_4$alkyl or a group

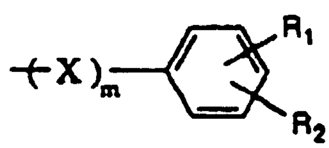

or $R_3$ and $R_4$ together form a piperidinyl radical.

**3.** A compound of formula I according to claim 1, wherein x is 2 and B is twice a group of formula

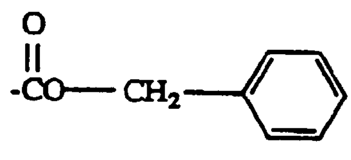 , 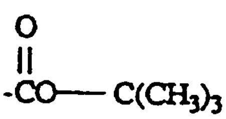 , 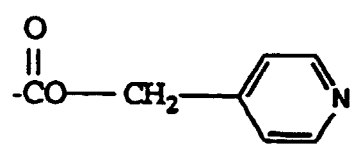 ,

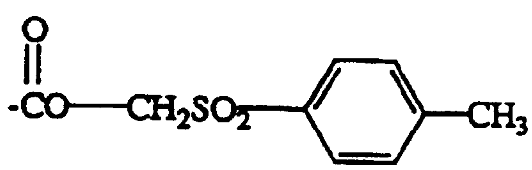 or 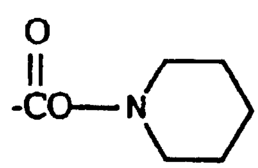 .

**4.** A compound of formula I according to claim 1, which is a perylenecarboxamide of formula

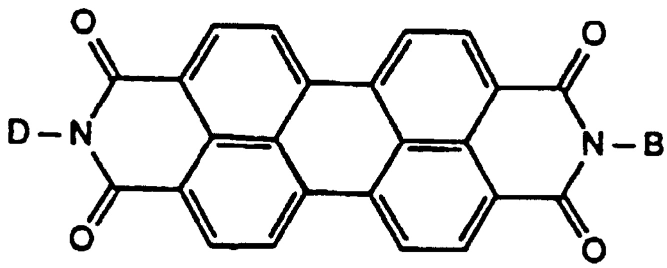

(VIIa)

or

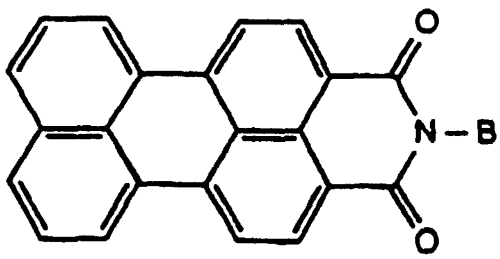

(VIIb),

wherein D is hydrogen, $C_1$-$C_6$alkyl, unsubstituted or halogen- or $C_1$-$C_4$alkyl-substituted phenyl, benzyl or phenethyl, or is B, and B is as defined in claim 1.

**5.** A compound of formula I according to claim 1, which is a quinacridone of formula

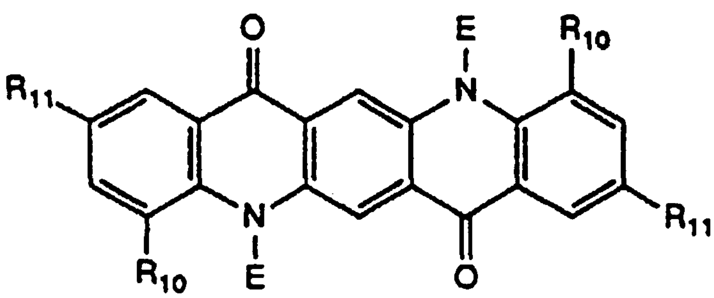

(VIII),

wherein $R_{10}$ and $R_{11}$ are each independently of the other hydrogen, halogen, $C_1$-$C_{18}$alkyl, $C_1$-$C_4$alkoxy or phenyl, and E is hydrogen or B, with the proviso that E is in at least one instance B.

**6.** A compound of formula I according to claim 1, which is a dioxazine of formula

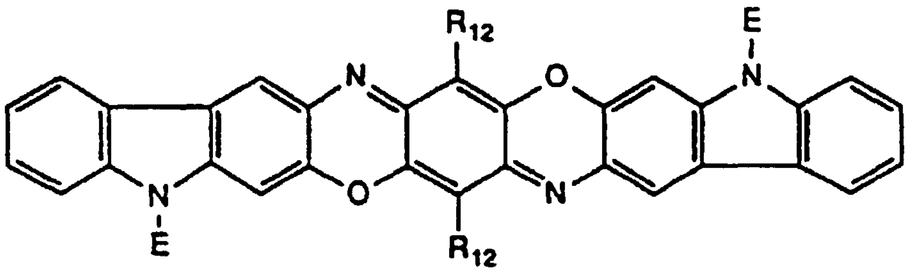 (IX),

wherein $R_{12}$ is hydrogen, halogen or $C_1$-$C_{18}$alkyl, and E is hydrogen or B, with the proviso that E is in at least one instance B.

**7.** A compound of formula I according to claim 1, which is an isoindoline of formula

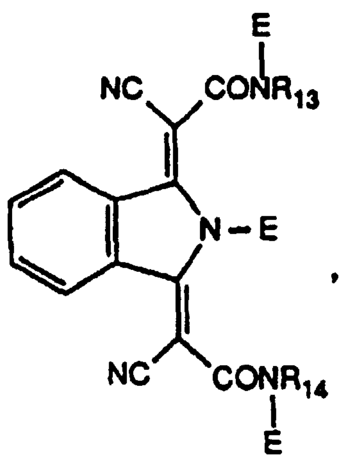

(X)

,

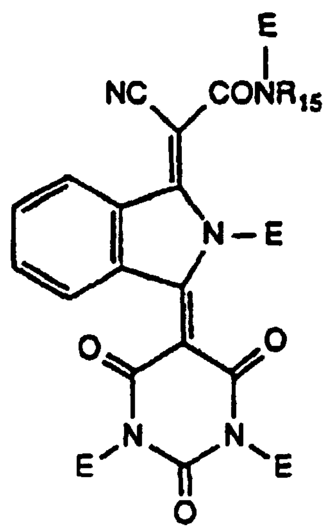

(XI)

or

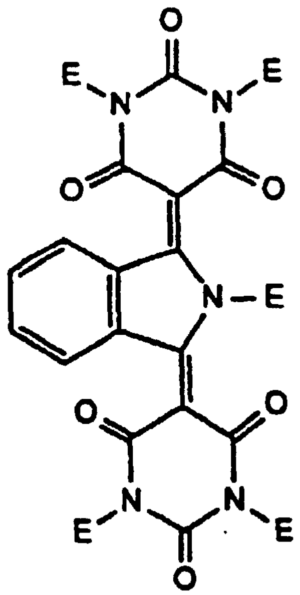

(XII)

wherein $R_{13}$ is a group

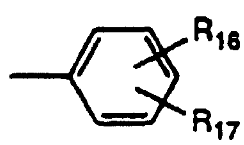

$R_{14}$ is hydrogen, $C_1$-$C_{18}$alkyl, benzyl or a group

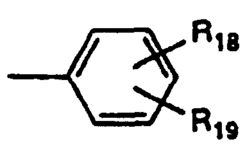

$R_{15}$ has the same meaning as $R_{13}$,
$R_{16}$, $R_{17}$, $R_{18}$ and R19 are each independently of one another hydrogen, $C_1$-$C_{18}$alkyl, $C_1$-$C_4$alkoxy, halogen or trifluoromethyl,
and E is hydrogen or B, with the proviso that E is in at least one instance B.

**8.** A compound of formula I according to claim 1, which is an indigo derivative of formula

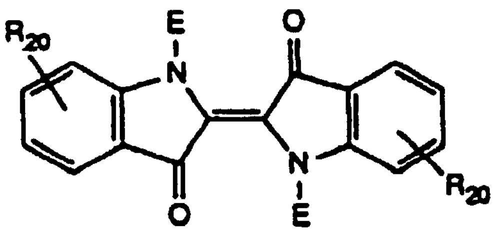

(XIII),

wherein $R_{20}$ is hydrogen, CN, $C_1$-$C_4$alkyl, $C_1$-$C_4$alkoxy or halogen, and E is hydrogen or B, with the proviso that E is in at least one instance B.

**9.** A compound of formula I according to claim 1, which is an azo compound of formula

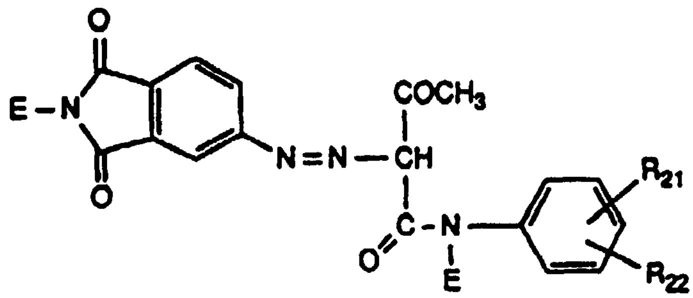

(XIV),

wherein $R_{21}$ and $R_{22}$ are each independently of the other hydrogen, halogen, $C_1$-$C_4$alkyl or $C_1$-$C_4$alkoxy, and E is hydrogen or B, with the proviso that E is in at least one instance B.

**10.** A compound of formula I according to claim 1, which is an anthraquinonoid compound of formula

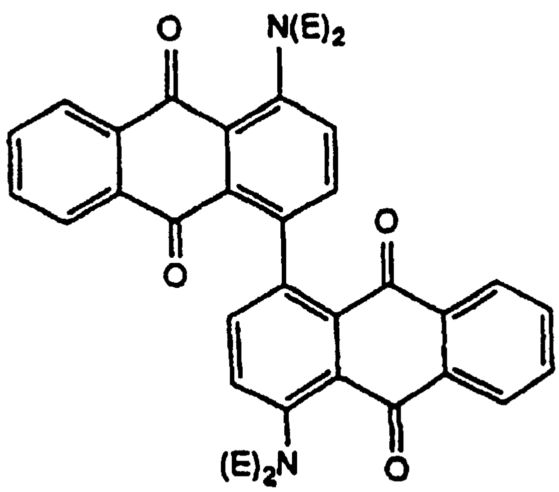

(XV),

wherein E is hydrogen or B, with the proviso that E is in at least one instance B.

**11.** A compound of formula I according to claim 1, which is a phthalocyanine of formula

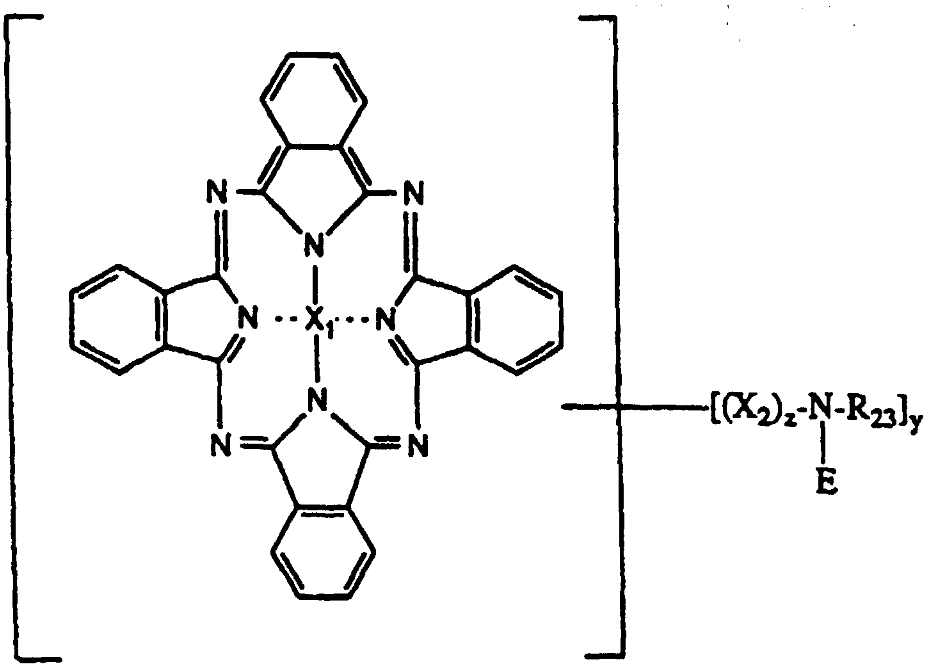

(XVI),

where

$X_1$ is $H_2$, Zn, Cu, Ni, Fe or V,
$X_2$ is $-CH(R_{24})-$ or $-SO_2-$
$R_{23}$ is hydrogen, $C_1$-$C_4$alkyl, $-N(E)R_{24}$, $-NHCOR_{25}$, $-COR_{25}$ or

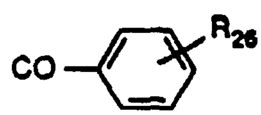

,

$R_{24}$ is hydrogen or $C_1$-$C_4$alkyl, $R_{25}$ is $C_1$-$C_4$alkyl and $R_{26}$ is hydrogen, halogen, $C_1$-$C_4$alkyl or $C_1$-$C_4$alkoxy, z is zero or 1 and y is a number from 1 to 4, and E is hydrogen or B, with the provisos that E is in at least one instance B and that, if $X_1$ is Cu, $X_2$ is $SO_2$, $R_{23}$ is $-N(E)R_{24}$ and $R_{24}$ is hydrogen, the phthalocyanine of formula (XVI) is not of the formula

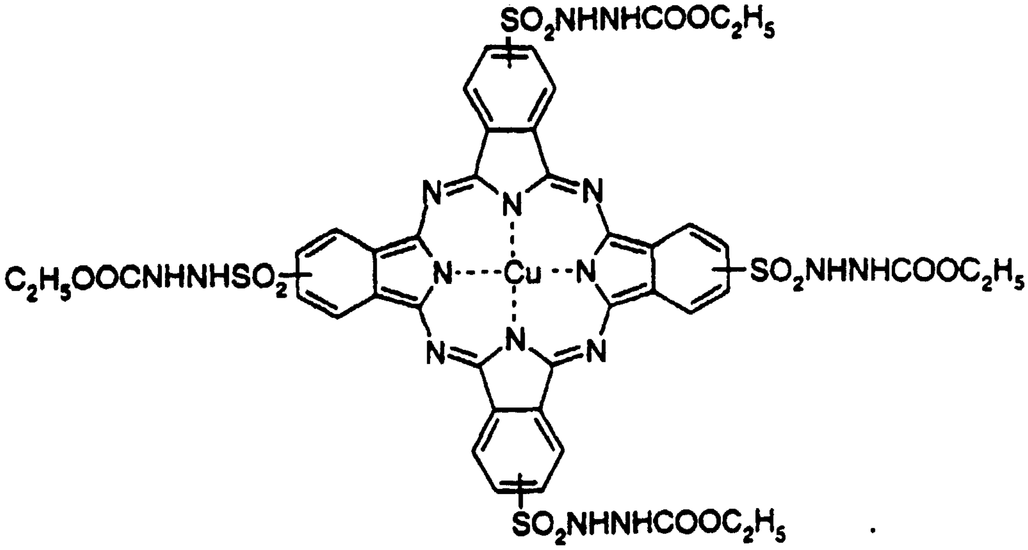

.

12. A process for the preparation of a compound of formula I in which the number of groups B that are not hydrogen is z, z being a number from 1 to x, which comprises reacting a compound of formula

$$A(H)x \qquad (XVII),$$

wherein A and x are as defined in claim 1,
in a molar ratio of from $\frac{1}{z}$:2 to $\frac{1}{z}$:10,
with a dicarbonate of formula

$$B - O - B \qquad (XVIII)$$

or with a trihaloacetate of formula

$$(R_{27})_3C - B \qquad (XIX),$$

or with an azide of formula

$$BN_3 \qquad (XX),$$

or with a carbonate of formula

$$B\text{-}OR_{28} \qquad (XXI),$$

or with an alkylideneiminooxyformate of formula

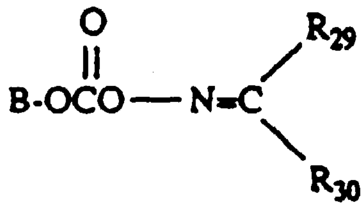

(XXII),

wherein B is as defined above, $R_{27}$ is chloro, fluoro or bromo, $R_{28}$ is $C_1$-$C_4$alkyl or unsubstituted phenyl or phenyl which is substituted by halogen, $C_1$-$C_4$alkyl, $C_1$-$C_4$alkoxy or -CN, $R_{29}$ is -CN or -COO$R_{28}$, and $R_{30}$ is unsubstituted phenyl or phenyl which is substituted by halogen, $C_1$-$C_4$alkyl, $C_1$-$C_4$alkoxy or -CN, in an aprotic organic solvent and in the presence of a base as catalyst.

**13.** A process according to claim 12, wherein the compound of formula XVII is reacted with a dicarbonate of formula XVIII.

**14.** High molecular weight organic material comprising in the mass a compound of formula I according to claim 1 as fluorescent colorant.

**15.** A method of colouring high molecular weight organic material in the mass by thermal, photolytic or chemical treatment of material according to claim 14, the compound of formula I according to claim 1 being converted in situ into a pigment of formula $A(H)_x$, wherein A and x are as defined in claim 1.

**16.** A heat-sensitive, photosensitive or chemosensitive recording material comprising a soluble chromophore of formula I according to claim 1.

**17.** A photoluminescent or electroluminescent material comprising a soluble chromophore of formula I according to claim 1.

**18.** A process for the preparation of a crystalline pigment of formula $A(H)_x$ (XXIII) in which A and x are as defined in claim 1, which comprises subjecting a compound of formula I according to claim 1

a) to treatment with an organic or inorganic acid at from 50 to 180°C and subsequent cooling; or
b) to thermal treatment at from 180 to 350°C.

**19.** A process according to claim 18, wherein a compound of formula I prepared according to claim 12 is used.

**20.** A process according to claim 19, wherein the crystalline pigment of formula XXIII has a crystal modification which differs from that of the compound of formula XVII.

## Revendications

**1.** Composés de formule

$$A(B)_x \quad (I),$$

dans laquelle

A représente un reste d'un colorant de la famille de la quinacridone, du 4,4'-diamino-1,1'-dianthraquinonyle, de l'indanthrone, du pérylène, de l'indigo, de la quinophtalone, de l'isoindolinone, de l'isoindoline, de la dioxazine, de la phtalocyanine ou de l'arylazo-acétoacétamido-aryle,
lequel contient des atomes d'azote auxquels sont liés les x groupes B,

B représente un groupe de formule

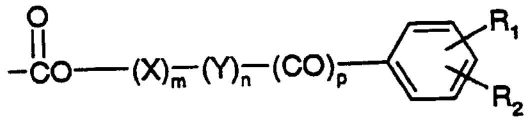

(II),

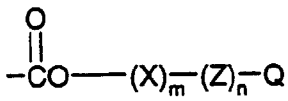

(III)

ou

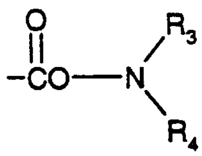

(IV)

et lorsque x vaut 2 ou plus, peut représenter également une à z fois des atomes d'hydrogène, z étant égal à x-1, et x est un entier de 1 à 4,
ou lorsque A représente un reste

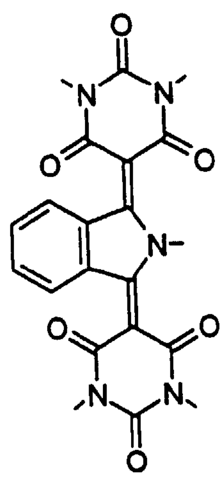

représente le nombre 5,

dans les formules II, III et IV

| | |
|---|---|
| m, n et p, | indépendamment les uns des autres, valant zéro ou 1, |
| X | représente des groupes alkylène en $C_1$-$C_{14}$ ou alcénylène en $C_2$-$C_8$, |
| Y | représente un groupe -V-$(CH_2)_q$-, |
| Z | représente un groupe -V-$(CH_2)_r$-, |
| V | représente un groupe cycloalkylène en $C_3$-$C_6$, |
| q | va de 1 à 6 et |
| r | va de zéro à 6, |
| $R_1$ et $R_2$ | représentent indépendamment l'un de l'autre un atome d'hydrogène, des groupes alkyle en $C_1$-$C_6$, |

alkoxy en $C_1$-$C_4$, halogène, CN, $NO_2$, phénoxy ou phényle non substitué ou substitué par des groupes alkyle en $C_1$-$C_4$, alkoxy en $C_1$-$C_4$ ou halogène,

Q représente un atome d'hydrogène, des groupes CN, $Si(R_1)_3$,

un groupe $C(R_5)(R_6)(R_7)$,
dans laquelle $R_5$, $R_6$ et $R_7$ représentent indépendamment les uns des autres des atomes d'hydrogène ou d'halogène et
au moins l'un des restes $R_5$, $R_6$ et $R_7$ représente des atomes d'halogène,
un groupe

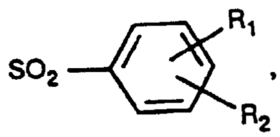

où $R_1$ et $R_2$ possèdent les significations données ci-dessus,
un groupe $SO_2R_8$ ou $SR_8$ où $R_8$ représente un groupe alkyle en $C_1$-$C_4$,
un groupe $CH(R_9)_2$ où $R_9$ représente un groupe phényle non substitué ou substitué par des groupes alkyle en $C_1$-$C_4$, alkoxy en $C_1$-$C_4$ ou halogène,
ou
un groupe de formule

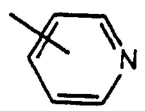,
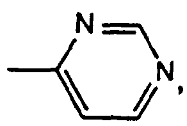,
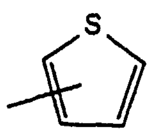,
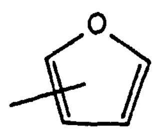,

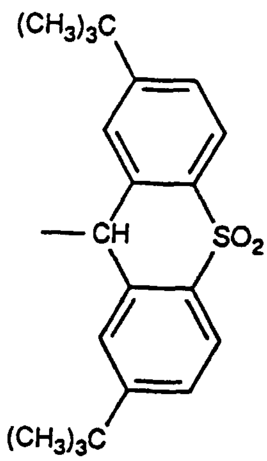,
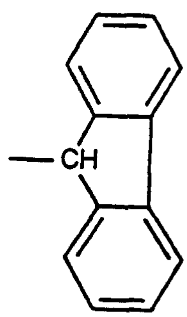,
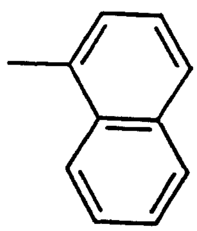
ou
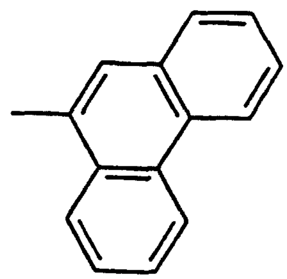

$R_3$ et $R_4$ représentent, indépendamment l'un de l'autre, un atome d'hydrogène, un groupe alkyle en $C_1$-$C_{18}$, un groupe

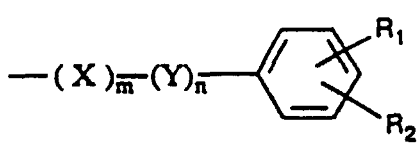,

où X, Y, $R_1$, $R_2$, m et n ont les significations données ci-dessus, ou $R_3$ et $R_4$ forment ensemble avec l'atome d'azote auquel ils sont liés un reste pyrrolidinyle, pipéridinyle ou morpholinyle,
à la condition que $A(B)_x$ ne soit pas égal à

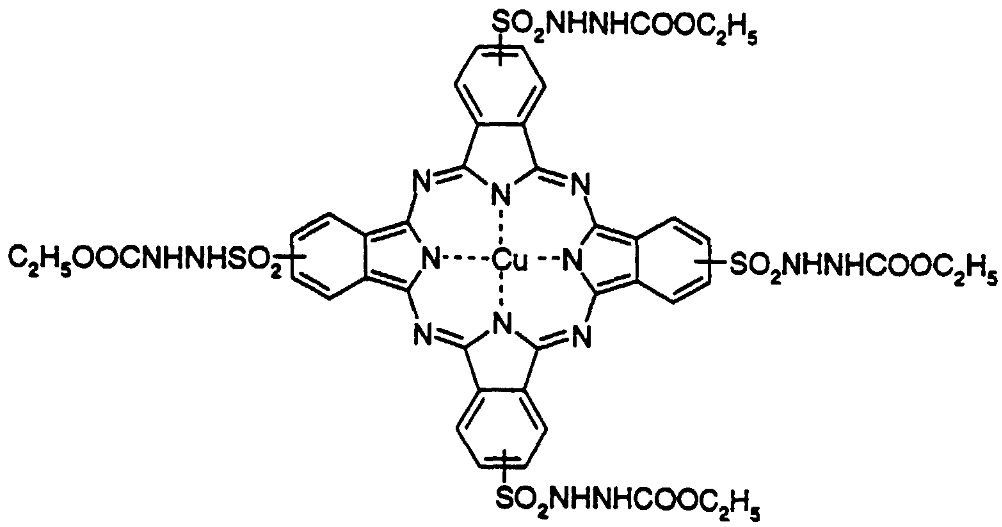

**2.** Composés de formule I selon la revendication 1, caractérisés en ce que x vaut 1 ou 2 et B représente un groupe de formule

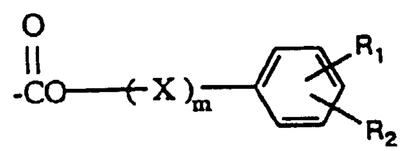

(V)

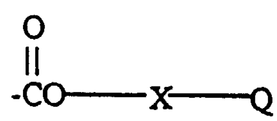

(VI) ou (IV)

et, lorsque x vaut 2, peut représenter aussi un atome d'hydrogène, dans les formules IV, V et VI

| | |
|---|---|
| m | vaut zéro ou 1, |
| x | représente des groupes alkylène en $C_1$-$C_4$ ou alkylène en $C_2$-$C_5$, |
| $R_1$ et $R_2$ | représentent indépendamment l'un de l'autre un atome d'hydrogène, des groupes alkyle en $C_1$-$C_4$, méthoxy, chlore ou $NO_2$, et |
| Q | représente un atome d'hydrogène, des groupes CN, $CCl_3$, un groupe |

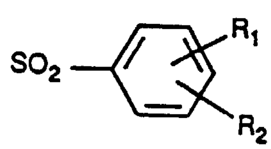

,

$SO_2CH_3$ ou $SCH_3$,

| | |
|---|---|
| $R_3$ et $R_4$ | représentent indépendamment l'un de l'autre un atome d'hydrogène, un groupe alkyle en $C_1$-$C_4$ ou |

un groupe

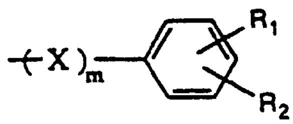

ou $R_3$ et $R_4$ forment ensemble un reste pipéridinyle.

**3.** Composés de formule I selon la revendication 1, caractérisés en ce que x vaut 2 et B représente deux fois un groupe de formule

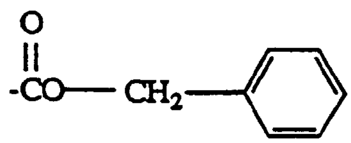 , 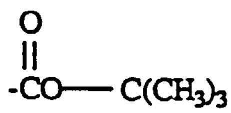 , 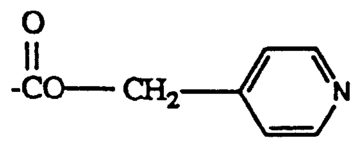 ,

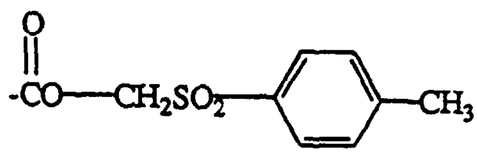 ou 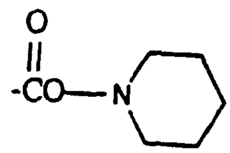

**4.** Composés de formule I selon la revendication 1, caractérisés en ce qu'il s'agit d'imides de l'acide pérylène carboxylique de formules

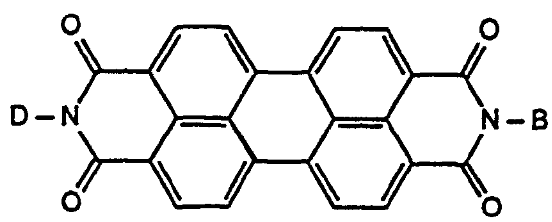

(VIIa)

ou

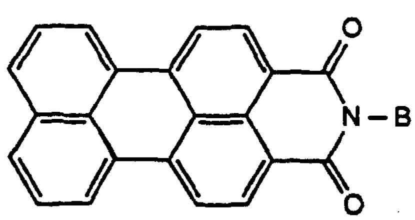

(VIIb),

dans lesquels D représente un atome d'hydrogène, des groupes alkyle en $C_1$-$C_6$, phénéthyle, benzyle ou phényle non substitué ou substitué par des atomes d'halogènes ou des groupes alkyle en $C_1$-$C_4$, et B possède la signification donnée à la revendication 1.

**5.** Composés de formule I selon la revendication 1, caractérisés en ce qu'il s'agit

de quinacridones de formule

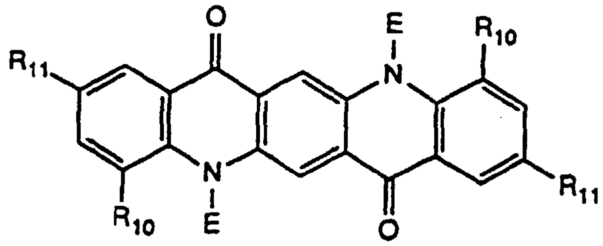

(VIII),

dans laquelle $R_{10}$ et $R_{11}$ représentent indépendamment l'un de l'autre, des atomes d'hydrogène, d'halogène, des groupes alkyle en $C_1$-$C_{18}$, alkoxy en $C_1$-$C_4$ ou phényle et $C_1$-$C_4$ ou phényle et E représente un atome d'hydrogène ou B, à la condition que E soit au moins une fois B.

**6.** Composés de formule I selon la revendication 1, caractérisés en ce qu'il s'agit de dioxazines de formule

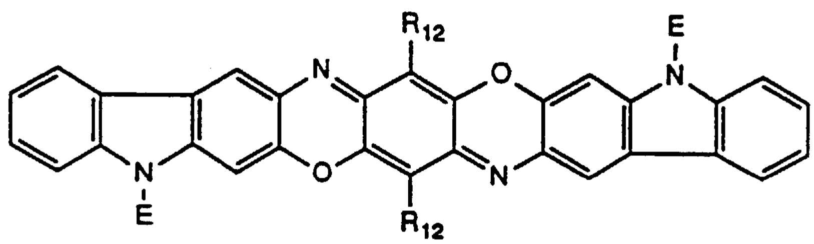

(IX),

dans laquelle $R_{12}$ représente des atomes d'hydrogène, des atomes d'halogène ou des groupes alkyle en $C_1$-$C_{18}$ et E représente un atome d'hydrogène ou B, à la condition que E soit au moins une fois B.

**7.** Composés de formule I selon la revendication 1, caractérisés en ce qu'il s'agit d'isoindolinones de formules

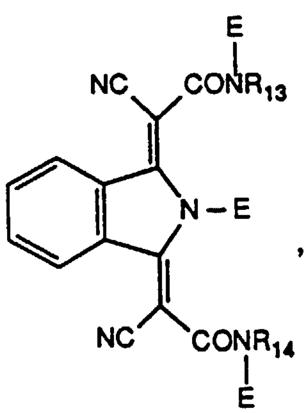

,

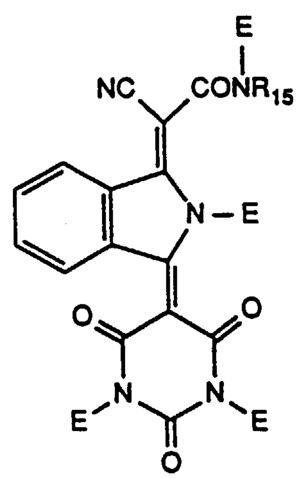

ou

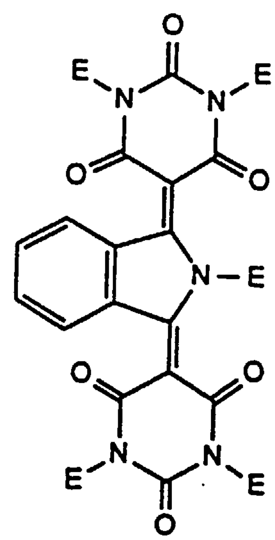

(X) (XI) (XII)

dans lesquelles $R_{13}$ représente un groupe

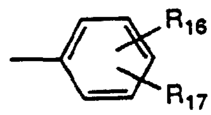

$R_{14}$ représente un atome d'hydrogène, des groupes alkyle en $C_1$-$C_{18}$, benzyle ou un groupe

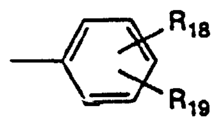

$R_{15}$ possède la même signification que $R_{13}$,

$R_{16}$, $R_{17}$, $R_{18}$ et $R_{19}$ représentent indépendamment les uns des autres des atomes d'hydrogène, des groupes alkyle en $C_1$-$C_{18}$, alkoxy en $C_1$-$C_4$, halogène ou trifluorométhyle et E représente un atome d'hydrogène ou B, à la condition que E soit au moins une fois B.

**8.** Composés de formule I selon la revendication 1, caractérisés en ce qu'il s'agit de dérivés de l'indigo de formule

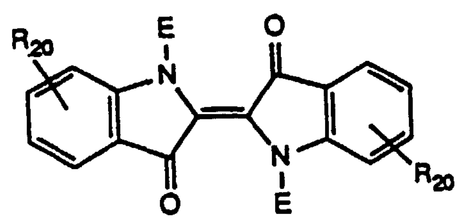

(XIII),

dans laquelle $R_{20}$ représente des atomes d'hydrogène, des groupes CN, alkyle en $C_1$-$C_{18}$, alkoxy en $C_1$-$C_4$ ou halogène, et E représente un atome d'hydrogène ou B, à la condition que E soit au moins une fois B.

**9.** Composés de formule I selon la revendication 1, caractérisés en ce qu'il s'agit de composés azoïques de formule

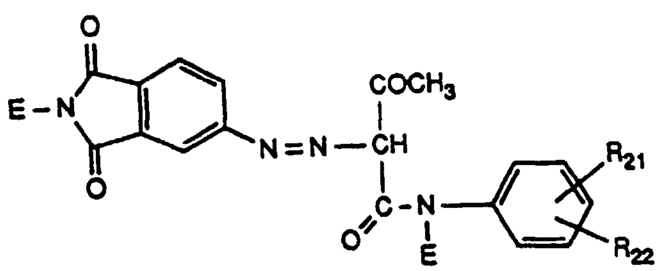

(XIV),

dans laquelle $R_{21}$ et $R_{22}$ représentent indépendamment l'un de l'autre des atomes d'hydrogène, d'halogène, des groupes alkyle en $C_1$-$C_4$ ou alkoxy en $C_1$-$C_4$ et E représente un atome d'hydrogène ou B, à la condition que E soit au moins une fois B.

**10.** Composés de formule I selon la revendication 1, caractérisés en ce qu'il s'agit d'anthraquinoïdes de formule

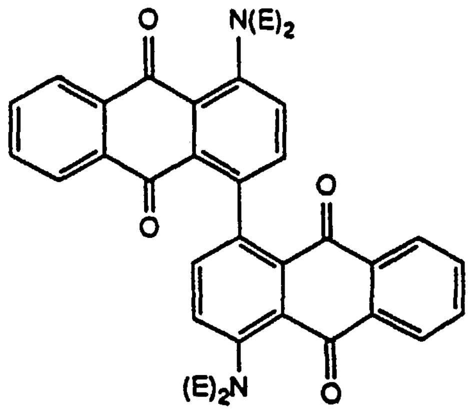

(XV)

dans laquelle E représente un atome d'hydrogène ou B, à la condition que E soit au moins une fois B.

**11.** Composés de formule I selon la revendication 1, caractérisés en ce qu'il s'agit de phtalocyanines de formule

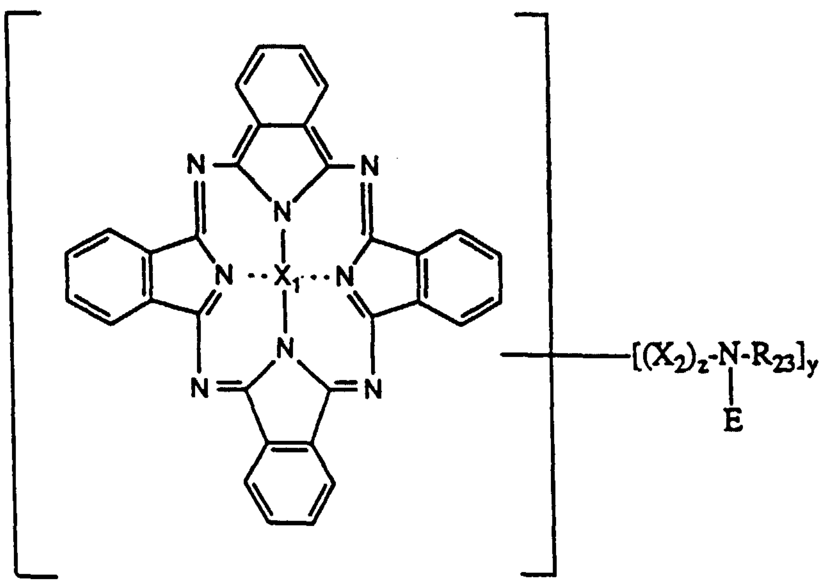

(XVI),

dans laquelle

$X_1$ représente $H_2$, Zn, Cu, Ni, Fe ou V,
$X_2$ représente $-CH(R_{24})-$ ou $-SO_2-$
$R_{23}$ représente des atomes d'hydrogène, des groupes alkyle en $C_1$-$C_4$, $-N(E)R_{24}$, $-NHCOR_{25}$, $-COR_{25}$ ou

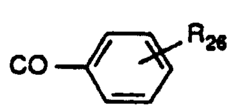

,

$R_{24}$ représente des atomes d'hydrogène ou des groupes alkyle en $C_1$-$C_4$,
$R_{25}$ représente des groupes alkyle en $C_1$-$C_4$, et
$R_{26}$ représente des atomes d'hydrogène, des atomes d'halogène, des groupes alkyle en $C_1$-$C_4$ ou alkoxy en $C_1$-$C_4$,

z vaut zéro ou 1 et
y va de 1 à 4,

et E représente un atome d'hydrogène ou B, à la condition que E dans chacune des formules représente au moins une fois B, et que lorsque $X_1$ est égal à Cu, $X_2$ égal à $SO_2$, $R_{23}$ égal à $-N(E)R_{24}$ et $R_{24}$ égal à un atome d'hydrogène, la phtalocyanine de formule (XIV) ne corresponde pas à la formule

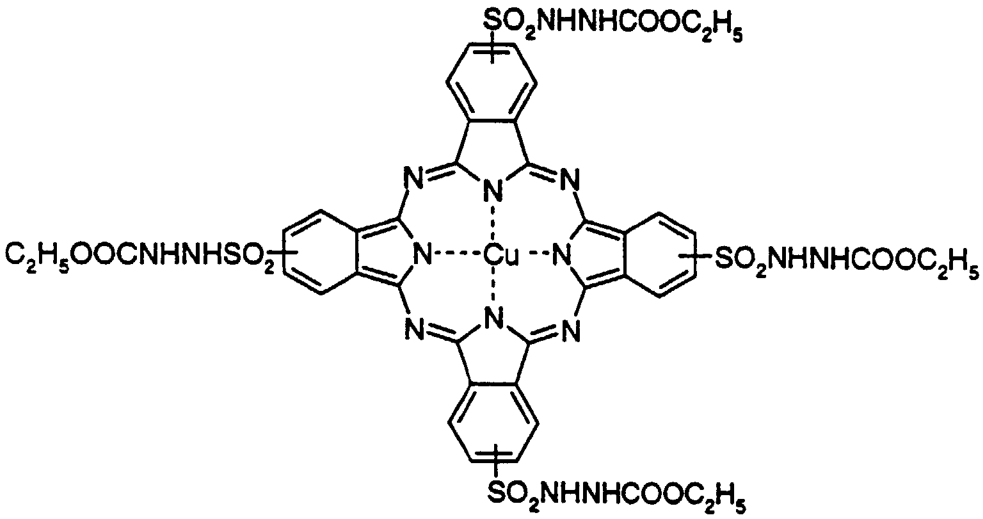

**12.** Procédé de préparation des composés de formule I où le nombre des groupes B lesquels ne sont pas des atomes d'hydrogène, est égal à z, z étant un nombre de 1 à x, caractérisé en ce que l'on fait réagir un composé de formule

$$A(H)_x \qquad \text{(XVII)}$$

dans laquelle A et x possèdent les significations données à la revendication 1,
dans un rapport molaire de $\frac{1}{z}:2$ à $\frac{1}{z}:10$,
sur un dicarbonate de formule

$$B\text{-}O\text{-}B \qquad \text{(XVIII)}$$

ou sur un ester de l'acide trihalogénoacétique de formule

$$(R_{27})_3C\text{-}B \qquad \text{(XIX),}$$

ou sur un azoture de formule

$$BN_3 \qquad \text{(XX),}$$

ou sur un carbonate de formule

$$B\text{-}OR_{28} \qquad \text{(XXI)}$$

ou sur un ester de l'acide alkylidène-imino-oxyformique de formule

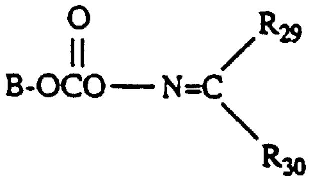

(XXII),

dans laquelle B possède à chaque fois la signification donnée ci-dessus, $R_{27}$ représente des atomes de chlore, de fluor ou de brome, $R_{28}$ représente des groupes alkyle en $C_1$-$C_4$ ou phényle non substitué ou substitué par des atomes d'halogènes, des groupes alkyle en $C_1$-$C_4$, alkoxy en $C_1$-$C_4$ ou -CN, $R_{29}$ représente les groupes -CN ou -$COOR_{28}$ et $R_{30}$ représente un groupe phényle non substitué ou substitué par des groupes halogène alkyle en $C_1$-$C_4$, alkoxy en $C_1$-$C_4$ ou -CN, en milieu d'un solvant organique aprotique en présence d'une base comme catalyseur.

**13.** Procédé selon la revendication 12, caractérisé en ce que l'on fait réagir le composé de formule XVII sur un dicarbonate de formule XVIII.

**14.** Matière organique de haut poids moléculaire contenant dans la masse un composé de formule I selon la revendication 1 en tant que colorant fluorescent.

**15.** Procédé de pigmentation en masse d'une matière organique de haut poids moléculaire par traitement thermique, photolytique ou chimique d'une matière selon la revendication 14, le composé de formule I selon la revendication 1 étant transformé in situ en un pigment de formule A(H)x, dans laquelle A et x possèdent les significations données à la revendication 1.

**16.** Matière d'enregistrement thermosensible, photosensible ou chimiosensible contenant un chromophore soluble de formule I selon la revendication 1.

**17.** Matières photoluminescentes et électroluminescentes contenant un chromophore de formule I selon la revendication 1.

**18.** Procédé de préparation d'un pigment cristallin de formule $A(H)_x$ (XXIII), dans laquelle A possède la signification donnée à la revendication 1, caractérisé en ce que l'on soumet un composé de formule I selon la revendication 1

a) à une température de 50 à 180°C à un traitement par un acide organique ou inorganique et ensuite à un refroidissement ; ou
b) à une température de 180 à 350°C à un traitement thermique.

**19.** Procédé selon la revendication 18, dans lequel on emploie un composé de formule I préparé selon la revendication 12.

**20.** Procédé selon la revendication 19, dans lequel le pigment cristallin de formule XXIII présente une modification cristalline laquelle est différente de la modification cristalline du composé de formule XVII.